(19)

Europäisches
Patentamt
European
Patent Office
Office européen
des brevets

(11) **EP 3 540 643 A1**

(12) **EUROPEAN PATENT APPLICATION**

(43) Date of publication:
**18.09.2019 Bulletin 2019/38**

(51) Int Cl.:
*G06K 9/00* (2006.01)     *G06K 9/20* (2006.01)
*G06K 9/46* (2006.01)

(21) Application number: **19162218.2**

(22) Date of filing: **12.03.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.03.2018 JP 2018050247**

(71) Applicant: **Ricoh Company, Ltd.**
**Tokyo 143-8555 (JP)**

(72) Inventor: **YAMADA, Yuu**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(54) **IMAGE PROCESSING APPARATUS AND IMAGE PROCESSING METHOD**

(57) According to an embodiment, an image processing apparatus (30) includes an image acquiring unit (100a, 100b), a distance calculating unit (300), an edge extracting unit (401), and a detecting unit (402). The image acquiring unit (100a, 100b) is configured to acquire, as a luminance image, any of an image that is captured by a first imaging unit and an image that is captured by a second imaging unit, the first imaging unit and the second imaging unit imaging an object. The distance calculating unit (300) is configured to calculate distance information based on the images that are captured by the first imaging unit and the second imaging unit. The edge extracting unit (401) is configured to extract a horizontal edge from the luminance image. The detecting unit (402) is configured to detect the object based on a second region that is determined by the distance information corresponding to first regions that are elongated in a vertical direction around both ends of the horizontal edge that is extracted by the edge extracting unit (401).

## FIG.20

```
        START
          │
          ▼                    S11
┌────────────────────────────┐
│ GENERATE EDGE IMAGE FROM   │
│      LUMINANCE IMAGE       │
└────────────────────────────┘
          │
          ▼                    S12
┌────────────────────────────┐
│  EXTRACT HORIZONTAL EDGES  │
│      FROM EDGE IMAGE       │
└────────────────────────────┘
          │
          ▼                    S13
┌────────────────────────────┐
│ SPECIFY EACH OF EDGE POINTS│
│ FROM DISPARITIES PRESENT AT│
│   BOTH ENDS OF SPECIFIC    │
│      HORIZONTAL EDGE       │
└────────────────────────────┘
          │
          ▼                    S14
┌────────────────────────────┐
│     DETECT OBJECT FROM     │
│    SPECIFIED EDGE POINTS   │
└────────────────────────────┘
          │
          ▼
         END
```

EP 3 540 643 A1

**Description**

BACKGROUND OF THE INVENTION

1. Field of the Invention

The present invention relates to an image processing apparatus, an object recognition device, a device control system, a movable body, an image processing method, and a computer-readable medium.

2. Description of the Related Art

Conventionally, regarding the safety of automobiles, automotive body structures and the like have been developed in terms of how to save pedestrians and protect occupants in an automobile when the automobile crashes into the pedestrians. In recent years, with the improvement of information processing technologies and image processing technologies, techniques for detecting persons and automobiles at a high speed have been developed. By applying the techniques as described above, some automobiles that are equipped with an automatic emergency braking (AEB) control function to prevent crashes before happens by automatically applying a brake before an automobile crashes into an object have been developed. Further, in addition to a safety performance function, adaptive cruise control (ACC) that is a control function to recognize and automatically follow a vehicle ahead to reduce load on a driver at the time of driving has been put on the market as an in-vehicle system.

To realize the control as described above, it is necessary to accurately measure a distance from a subject vehicle to an object, such as a person or another vehicle, and for this purpose, distance measurement using millimeter-wave radar and laser radar, distance measurement using a stereo camera, and the like have been put to practical use. Among those described above, as an object detection method using a stereo camera, a technique for detecting a position of an object including a depth by generating a disparity image and thereafter performing processes of estimating a road surface shape, generating a look-down view image, and detecting an isolated region that is a disparity cluster based on labeling has been known.

However, in the object detection method, a technique for detecting an object by extracting an edge in a luminance image without performing the processes, such as estimation of a road surface shape and generation of a look-down view image, has also been known.

As the technique for detecting an object using a luminance image as described above, a technique for detecting a pair of vertical edges located in exactly opposite directions and detecting an object based on the assumption that the object is present between the vertical edges has been disclosed (see Japanese Patent No. 4123138).

However, in the technique described in Japanese Patent No. 4123138, when poles are located ahead at a certain distance from each other for example, vertical edges are detected due to the poles and the vertical edges are detected as a pair, so that it may be possible to detect that an object is present even though nothing exists in a space between the poles.

In view of the foregoing situations, there is a need to provide an image processing apparatus, an object recognition device, a device control system, a movable body, an image processing method, and a computer-readable medium capable of detecting an object at a high speed and with high accuracy without estimating a road surface shape and generating a look-down view image.

SUMMARY OF THE INVENTION

According to an embodiment, an image processing apparatus includes an image acquiring unit, a distance calculating unit, an edge extracting unit, and a detecting unit. The image acquiring unit is configured to acquire, as a luminance image, any of an image that is captured by a first imaging unit and an image that is captured by a second imaging unit, the first imaging unit and the second imaging unit imaging an object. The distance calculating unit is configured to calculate distance information based on the images that are captured by the first imaging unit and the second imaging unit. The edge extracting unit is configured to extract a horizontal edge from the luminance image. The detecting unit is configured to detect the object based on a second region that is determined by the distance information corresponding to first regions that are elongated in a vertical direction around both ends of the horizontal edge that is extracted by the edge extracting unit.

BRIEF DESCRIPTION OF THE DRAWINGS

FIGS. 1A, 1B, and 1C are diagrams illustrating an example in which a device control system according to a first embodiment is mounted on a vehicle;

FIG. 2 is a diagram illustrating an example of an exterior of an object recognition device according to the first embodiment;

FIG. 3 is a diagram illustrating an example of a hardware configuration of the object recognition device according to the first embodiment;

FIG. 4 is a diagram illustrating an example of a functional block configuration of the object recognition device according to the first embodiment;

FIG. 5 is a diagram for explaining the principle for deriving a distance from an imaging unit to an object;

FIGS. 6A and 6B are diagrams for explaining how to obtain a corresponding pixel in a comparison image with respect to a reference pixel in a reference image;

FIG. 7 is a graph illustrating an example of a relationship between a shift amount and a cost value in units of pixels;

FIG. 8 is a diagram for explaining sub-pixel estimation using the parabola fitting;

FIG. 9 is a diagram for explaining sub-pixel estimation using the least squares method;

FIGS. 10A and 10B are diagrams illustrating an example of a disparity image that is generated from a captured image;

FIGS. 11A and 11B are diagrams illustrating examples of calculation filters for detecting edges;

FIG. 12 is a diagram for explaining determination of a horizontal edge;

FIGS. 13A and 13B are diagrams illustrating an example of an edge image indicating horizontal edges obtained from a luminance image;

FIG. 14 is a diagram for explaining how to obtain a distance to a horizontal line on a vehicle;

FIG. 15 is a diagram illustrating an example of an edge image obtained by excluding short horizontal edges;

FIG. 16 is a diagram illustrating an example in which horizontal edges are superimposed on a disparity image;

FIG. 17 is a diagram illustrating a left-side region and a right-side region for obtaining a rectangle representing a vehicle detection region from a horizontal edge in the disparity image;

FIG. 18 is a diagram illustrating an example of the rectangle representing the vehicle detection region;

FIG. 19 is a flowchart illustrating an example of a stereo matching process performed by the object recognition device according to the first embodiment;

FIG. 20 is a flowchart illustrating an example of a clustering process performed by the object recognition device according to the first embodiment;

FIGS. 21A and 21B are diagrams illustrating an example of a functional block configuration of an object recognition device according to a second embodiment;

FIG. 22 is a diagram for explaining how to obtain a score in a rectangle;

FIG. 23 is a diagram illustrating an example of a group of rectangles that are obtained in an edge image;

FIGS. 24A, 24B, and 24C are diagrams illustrating an example of a conspicuity map that is generated from scores in each of the rectangles; and

FIG. 25 is a flowchart illustrating an example of a clustering process performed by the object recognition device according to the second embodiment.

The accompanying drawings are intended to depict exemplary embodiments of the present invention and should not be interpreted to limit the scope thereof. Identical or similar reference numerals designate identical or similar components throughout the various drawings.

DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

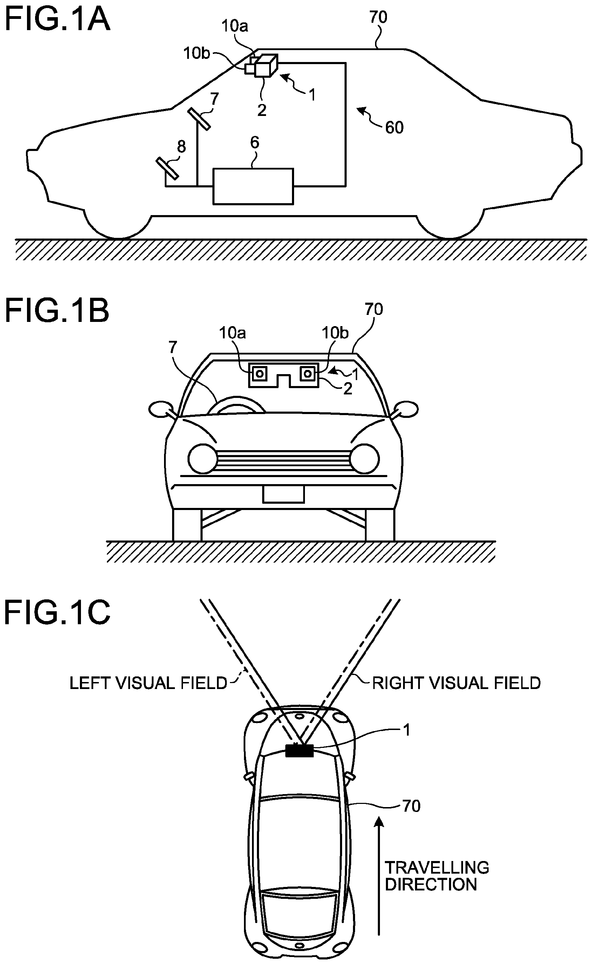

Exemplary embodiments of an image processing apparatus, an object recognition device, a device control system, a movable body, an image processing method, and a computer-readable medium according to the present invention will be described in detail below with reference to FIG. 1A to FIG. 25. The present invention is not limited by the embodiments below, and components in the embodiments described below include one that can easily be thought of by a person skilled in the art, one that is practically identical, and one that is within an equivalent range. Further, within the scope not departing from the gist of the following embodiments, various omission, replacement, modifications, and combinations of the components may be made.

First Embodiment

Schematic Configuration of Vehicle including Object Recognition Device

FIGS. 1A, 1B, and 1C are diagrams illustrating an example in which a device control system according to a first embodiment is mounted on a vehicle. With reference to FIGS. 1A, 1B, and 1C, a case in which a device control system 60 according to the first embodiment is mounted on a vehicle 70 will be described as an example.

FIG. 1A is a side view of the vehicle 70 on which the device control system 60 is mounted and is a schematic diagram illustrating how the device control system 60 is mounted, FIG. 1B is a front view of the vehicle 70, and FIG. 1C is a plan view (top view) of the vehicle 70.

As illustrated in FIGS. 1A, 1B, and 1C, the device control system 60 is mounted on the vehicle 70 that is an automobile. The device control system 60 includes an object recognition device 1, a vehicle control device 6, a steering wheel 7, and a brake pedal 8 that are installed in a vehicle interior that is a cabin space of the vehicle 70.

The object recognition device 1 has an imaging function to capture an image in a travelling direction of the vehicle 70 and is installed, for example, inside a front window of the vehicle 70 and near a rearview mirror. While a configuration and operation thereof will be described in detail later, the object recognition device 1 includes a main body 2 with built-in hardware components and includes imaging units 10a and 10b that are fixed to the main body 2. The imaging units 10a and 10b are fixed to the main body 2 so as to be able to capture images of an object that is present in the travelling direction of the vehicle 70. As illustrated in FIG. 1C, a visual field (right visual field) captured by the imaging unit 10a and a visual field (left visual field) captured by the imaging unit 10b are deviated from each other, and this deviation is measured as a disparity.

The vehicle control device 6 is an electronic control unit (ECU) that performs a variety of vehicle control based on recognition information received from the object recognition device 1. As an example of the vehicle control, the vehicle control device 6 performs, based on the recognition information received from the object recognition device 1, steering control for controlling a steering system (control target) including the steering wheel 7 to avoid obstacles, braking control for controlling the brake pedal 8 (control target) to make the vehicle 70 decelerate and stop, and the like.

As in the device control system 60 including the object recognition device 1 and the vehicle control device 6 as described above, by performing the vehicle control, such as the steering control and the braking control, it is possible to improve the driving safety of the vehicle 70.

Meanwhile, while the object recognition device 1 captures images ahead of the vehicle 70 as described above, the embodiments are not limited to this example. In other words, the object recognition device 1 may be installed to capture images on the rear or the side of the vehicle 70. In this case, the object recognition device 1 is able to detect positions of trailing vehicles and persons present on the rear of the vehicle 70 or detect positions of other vehicles and persons present on the side of the vehicle 70. Then, the vehicle control device 6 is able to detect risks at the time of lane changing or lane merging of the vehicle 70, and perform the vehicle control as described above. Further, when the vehicle 70 reverses for the parking purpose or the like, and if it is determined that there is a risk of crash based on the recognition information that is about obstacles on the rear of the vehicle 70 and that is output by the object recognition device 1, the vehicle control device 6 is able to perform the vehicle control as described above.

Configuration of Object Recognition Device

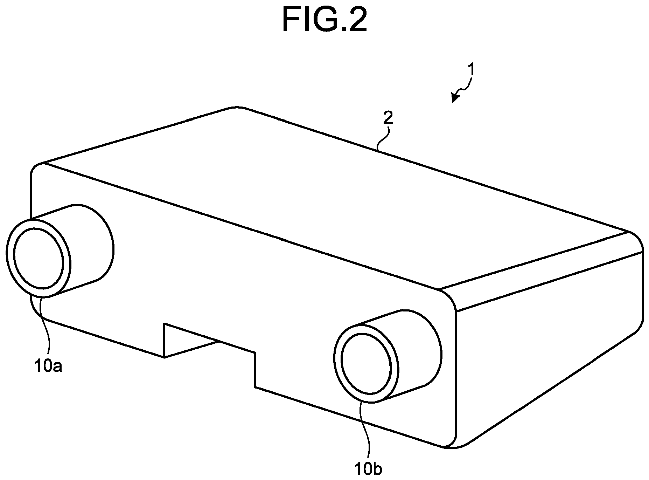

FIG. 2 is a diagram illustrating an example of an exterior of the object recognition device according to the first embodiment. As illustrated in FIG. 2, the object recognition device 1 includes the main body 2 with the built-in hardware components and includes the imaging units 10a and 10b that are fixed to the main body 2 as described above. The imaging units 10a and 10b are configured with a pair of cylindrical cameras that are arranged in a rectified manner with respect to the main body 2. Here, for convenience of explanation, the imaging unit 10a illustrated in FIG. 2 may be referred to as a "right-side camera", and the imaging unit 10b may be referred to as a "left-side camera" in some cases.

Hardware Configuration of Object Recognition Device

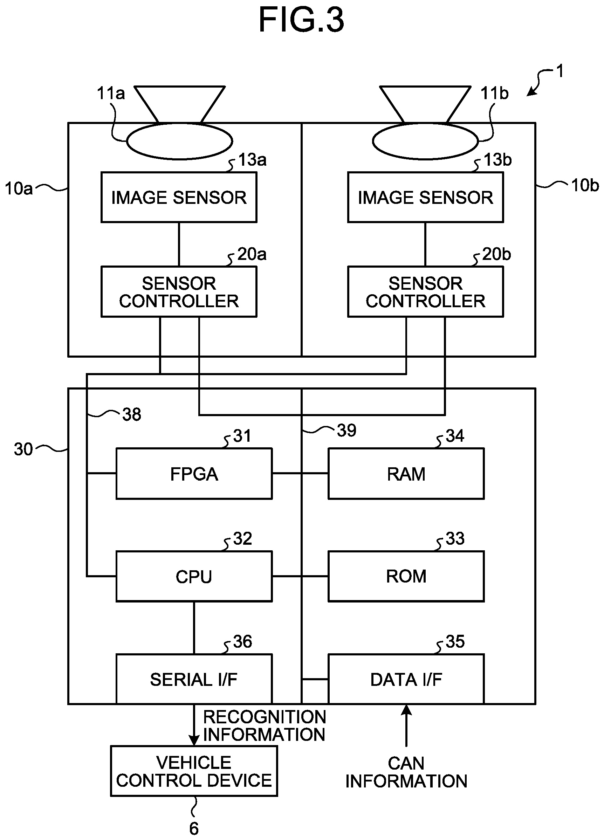

FIG. 3 is a diagram illustrating an example of a hardware configuration of the object recognition device according to the first embodiment. A hardware configuration of the object recognition device 1 according to the first embodiment will be described with reference to FIG. 3.

As illustrated in FIG. 3, the object recognition device 1 includes the imaging unit 10a, the imaging unit 10b, and an information processing unit 30. The imaging unit 10a and the imaging unit 10b constitute what is called a stereo camera.

The imaging unit 10a is a processing unit that captures an image of an object ahead and generates a captured image (luminance image). The imaging unit 10a includes an imaging lens 11a, an image sensor 13a, and a sensor controller 20a.

The imaging lens 11a is an optical element for refracting incident light and forming an image of an object on the image sensor 13a. The image sensor 13a is a semiconductor element that converts light, which has been incident on and passed through the imaging lens 11a, to an electrical analog image signal. The image sensor 13a is implemented using, for example, a solid-state image sensing device, such as a charge coupled device (CCD) or a complementary metal oxide semiconductor (CMOS).

The sensor controller 20a is a controller that performs exposure control on the image sensor 13a, image read control, control of communication with external circuits, image data transmission control, and the like. The sensor controller 20a converts the analog image signal obtained by the image sensor 13a to image data in a digital format (hereinafter, may be simply referred to as an "image" in some cases) (a captured image or a luminance image), and transmits the image data to the information processing unit 30 in the subsequent stage.

The imaging unit 10b is a processing unit that captures an image of an object ahead and generates a captured image (luminance image). The imaging unit 10b includes an imaging lens 11b, an image sensor 13b, and a sensor controller 20b. Functions of the imaging lens 11b, the image sensor 13b, and the sensor controller 20b are the same as the respective functions of the imaging lens 11a, the image sensor 13a, and the sensor controller 20a as described above. Further, the imaging lens 11a and the imaging lens 11b are installed such that principal surfaces of the respective lenses are arranged on the same plane so that the right-side camera and the left-side camera capture images under the same conditions.

The information processing unit 30 is a device that generates a disparity image from the luminance images obtained from the imaging units 10a and 10b, and performs an object recognition process of recognizing an object, such as a person or a vehicle, that appears in the luminance images. The information processing unit 30 outputs recognition information indicating a result of the object recognition process to the vehicle control device 6. The information processing unit 30 includes a field programmable gate array (FPGA) 31, a central processing unit (CPU) 32, a read only memory (ROM) 33, a random access memory (RAM) 34, a data interface (I/F) 35, a serial I/F 36, a serial bus line 38, and a data bus line 39.

The FPGA 31 is an integrated circuit that performs, on image data, a process that needs to be performed in real time. The FPGA 31 performs, for example, gamma correction, distortion correction (parallelization of a left image and a right image), and disparity calculation based on block matching (one example of a stereo matching process), generates a disparity image, and writes the generated disparity image in the RAM 34.

The CPU 32 is an arithmetic device that controls each of the functions of the information processing unit 30. For example, the CPU 32 controls the sensor controllers 20a and 20b of the imaging units 10a and 10b. Further, the CPU 32 acquires controller area network (CAN) information (for example, a vehicle speed, acceleration, a rudder angle, a yaw rate, and the like) on the vehicle 70 via the data I/F 35, and performs an object recognition process on an object by using the luminance images and the disparity image that are stored in the RAM 34, in accordance with an object recognition processing program that is stored in the ROM 33.

The ROM 33 is a non-volatile storage device that stores therein the object recognition processing program for causing the CPU 32 to perform the object recognition process of the information processing unit 30. The object recognition processing program is one example of an image processing program.

The RAM 34 is a volatile storage device that is used as a working area by the CPU 32.

The data I/F 35 is an interface that is connected to a CAN of the vehicle 70 and receives the CAN information. The serial I/F 36 is an interface for transmitting the recognition information, which is generated through the object recognition process performed by the information processing unit 30, to the vehicle control device 6 that is located outside, for example.

The serial bus line 38 is a bus for transmitting, to the sensor controllers 20a and 20b, change control data of a sensor exposure value obtained from the FPGA 31 or the CPU 32, change control data of an image read parameter, various kinds of setting data, and the like. The data bus line 39 is, as illustrated in FIG. 3, a bus for connecting the sensor controllers 20a and 20b, the FPGA 31, the CPU 32, the ROM 33, the RAM 34, the data I/F 35, and the serial I/F 36 such that they can perform communication with one another.

While the information processing unit 30 includes the FPGA 31 as an integrated circuit that generates the disparity image, the embodiments are not limited to this example, and other integrated circuits, such as an application specific integrated circuit (ASIC), may be adopted.

Further, the hardware configuration of the object recognition device 1 illustrated in FIG. 3 is one example, and the embodiments are not limited to this example. It is not necessary to include all of the components illustrated in FIG. 3, and it is possible to further include other components.

Functional Block Configuration of Object Recognition Device

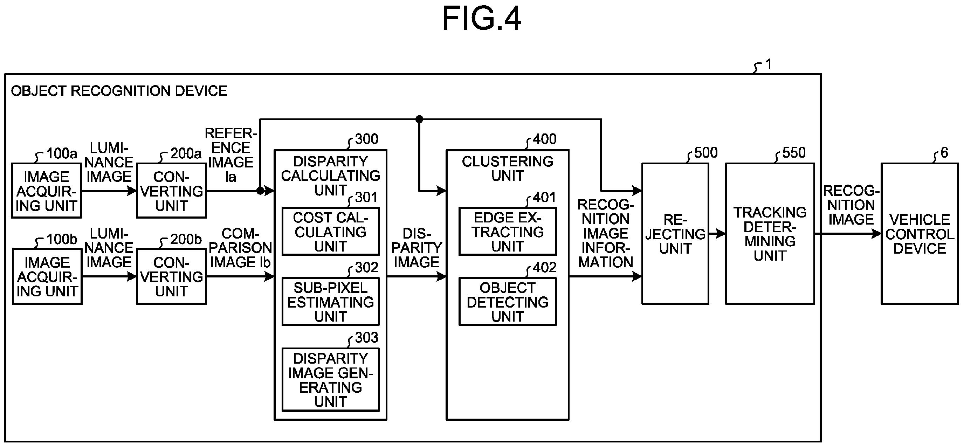

FIG. 4 is a diagram illustrating an example of a functional block configuration of the object recognition device according to the first embodiment. The functional block configuration of the object recognition device 1 according to the first embodiment will be described below with reference to FIG. 4.

As illustrated in FIG. 4, the object recognition device 1 according to the first embodiment includes an image acquiring unit 100a (a first imaging unit or a second imaging unit), an image acquiring unit 100b (the second imaging unit or the first imaging unit), converting units 200a and 200b, a disparity calculating unit 300 (one example of an image acquiring unit and a distance calculating unit), a clustering unit 400 (one example of the image acquiring unit), a rejecting unit 500, and a tracking determining unit 550.

The image acquiring unit 100a is a functional unit that captures an image of an object ahead by using the right-side camera, generates an analog image signal, and obtains a luminance image that is an image (captured image) based on the image signal. The image acquiring unit 100a is implemented by the imaging unit 10a illustrated in FIG. 3.

The image acquiring unit 100b is a functional unit that captures an image of an object ahead by using the left-side camera, generates an analog image signal, and obtains a luminance image that is an image (captured image) based on the image signal. The image acquiring unit 100b is implemented by the imaging unit 10b illustrated in FIG. 3.

The converting unit 200a is a functional unit that removes noise or the like from the image data of the luminance image obtained by the image acquiring unit 100a, and performs conversion on the image data to generate a reference image Ia that is to be a basis of a disparity image. The converting unit 200a is implemented by the FPGA 31 illustrated in FIG. 3.

The converting unit 200b is a functional unit that removes noise or the like from the image data of the luminance image obtained by the image acquiring unit 100b, and performs conversion on the image data to generate a comparison image Ib that is to be a basis of a disparity image. The converting unit 200b is implemented by the FPGA 31 illustrated in FIG. 3.

In other words, the converting units 200a and 200b output, to the disparity calculating unit 300, the reference image Ia and the comparison image Ib based on the two luminance images that are respectively output by the image acquiring units 100a and 100b. Further, the converting unit 200a outputs the reference image Ia to the clustering unit 400 and the rejecting unit 500.

The disparity calculating unit 300 is a functional unit that derives a disparity value dp for each of pixels of the reference image Ia by using local region block matching or the like, which is a stereo matching process, on the basis of the reference image Ia and the comparison image Ib received from the converting units 200a and 200b, and generates a disparity image (one example of distance information) that is constituted of the disparity value corresponding to each of the pixels of the reference image Ia. As illustrated in FIG. 4, the disparity calculating unit 300 includes a cost calculating unit 301, a sub-pixel estimating unit 302, and a disparity image generating unit 303.

The cost calculating unit 301 is a functional unit that calculates a cost value $C(p, d)$ of each candidate pixel $q(x+d, y)$, on the basis of a luminance value of a reference pixel $p(x, y)$ in the reference image Ia and on the basis of a luminance value (pixel value) of each candidate pixel $q(x+d, y)$, which is a candidate corresponding pixel and specified by shifting a pixel corresponding to the position of the reference pixel $p(x, y)$ by a shift amount d on the epipolar line that is based on the reference pixel $p(x, y)$ and that is present in the comparison image Ib. Meanwhile, the cost value $C(p, d)$ indicates a cost value of the candidate pixel $q(x+d, y)$ at a position that is shifted by the shift amount d from the position of the reference pixel p.

The sub-pixel estimating unit 302 is a functional unit that performs sub-pixel estimation based on the shift amount d corresponding to a minimum value of the cost values C of the pixels in the comparison image Ib with respect to the reference pixel in the reference image Ia and based on the cost values C at positions corresponding to adjacent shift amounts d, where the cost values C are calculated by the cost calculating unit 301.

The disparity image generating unit 303 is a functional unit that generates a disparity image that is an image in which the luminance value of each of the pixels of the reference image Ia is replaced with the disparity value dp corresponding to each of the pixels, on the basis of the disparity value dp in units of sub-pixels derived by the sub-pixel estimating unit 302.

The disparity calculating unit 300 outputs the generated disparity image to the clustering unit 400. The disparity calculating unit 300 is implemented by the FPGA 31 illustrated in FIG. 3.

The clustering unit 400 is a functional unit that detects an object appearing in the disparity image on the basis of the reference image received from the converting unit 200a and the disparity image received from the disparity calculating unit 300. As illustrated in FIG. 4, the clustering unit 400 includes an edge extracting unit 401 and an object detecting unit 402 (detecting unit).

Meanwhile, it is not always necessary to input the reference image Ia from the converting unit 200a to the clustering unit 400, but it may be possible to input the comparison image Ib from the converting unit 200b and use the comparison image Ib to detect an object.

The edge extracting unit 401 is a functional unit that extracts a horizontal edge from the reference image Ia, and generates an edge image indicating the extracted horizontal edge.

The object detecting unit 402 is a functional unit that obtains a rectangle serving as an object detection region by using the horizontal edge extracted by the edge extracting unit 401 and the disparity image input from the disparity image generating unit 303.

The clustering unit 400 outputs information on an image of a detected object to the rejecting unit 500, where the image is an image in the rectangle obtained by the object detecting unit 402 (recognition image) and the information is, for example, coordinates indicating a position in the reference image Ia, a size, and the like (hereinafter, simply referred to as "recognition image information").

The rejecting unit 500 is a functional unit that performs rejection determination for determining whether to reject the recognition image indicated by the recognition image information, on the basis of the reference image Ia output by the converting unit 200a and the recognition image information output by the clustering unit 400. Here, rejection indicates a process of excluding the object from a target in subsequent processes (a tracking process and the like). The rejecting unit 500 includes a rejection determination result in corresponding recognition image information, and outputs the recognition image information to the tracking determining unit 550 in the subsequent stage.

The tracking determining unit 550 is a functional unit that determines whether to perform tracking of the object contained in the recognition image, on the basis of the rejection determination result obtained from the rejecting unit 500. For example, the tracking determining unit 550 determines that tracking of an object that has not been determined as being rejected by the rejecting unit 500 is to be performed, includes information indicating that the tracking is to be performed in recognition image information on the object, and outputs the recognition image information as the recognition information to the vehicle control device 6.

Further, each of the clustering unit 400, the rejecting unit 500, and the tracking determining unit 550 of the object recognition device 1 illustrated in FIG. 4 is implemented by causing the CPU 32 illustrated in FIG. 3 to execute a program (object recognition processing program). Meanwhile, a part or all of the clustering unit 400, the rejecting unit 500, and the tracking determining unit 550 may be implemented by the FPGA 31 that is a hardware circuit or other hardware circuits (an ASIC or the like).

The "image processing apparatus" according to the present invention may be a processing unit that includes the disparity calculating unit 300 and the clustering unit 400, or may be the information processing unit 30 that includes this processing unit.

Furthermore, each of the functional units of the object recognition device 1 illustrated in FIG. 4 is presented to schematically illustrate the functions, and need not always be configured in the same manner. For example, a plurality of independent functional units of the object recognition device 1 illustrated in FIG. 4 may be configured as a single functional unit. Alternatively, functions included in a single functional unit of the object recognition device 1 illustrated in FIG. 4 may be divided into a plurality of parts and configured as a plurality of functional units.

Stereo Matching Process (Disparity Calculation))

Cost Calculation

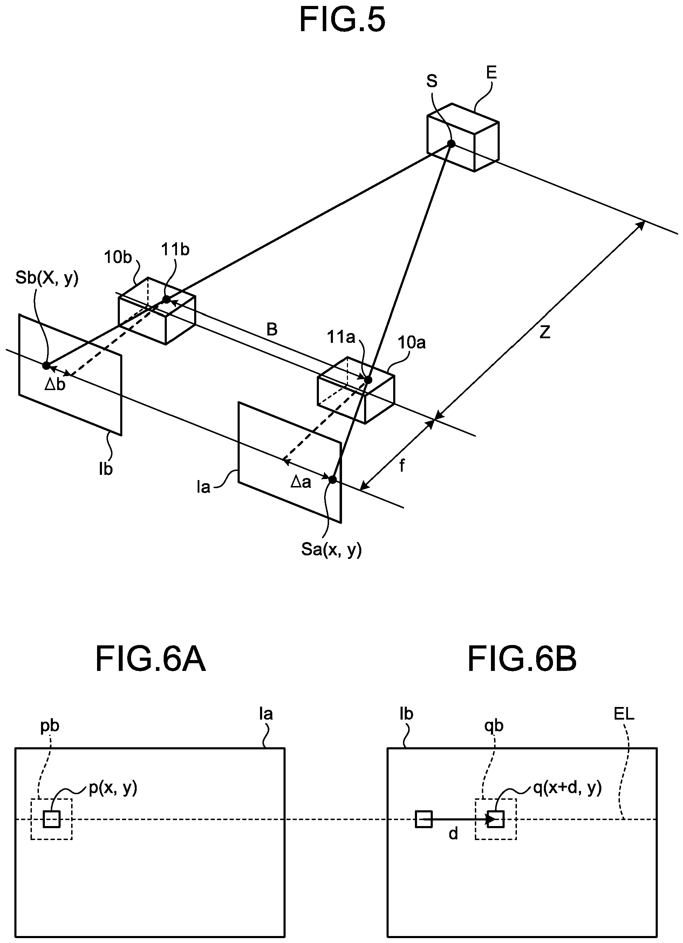

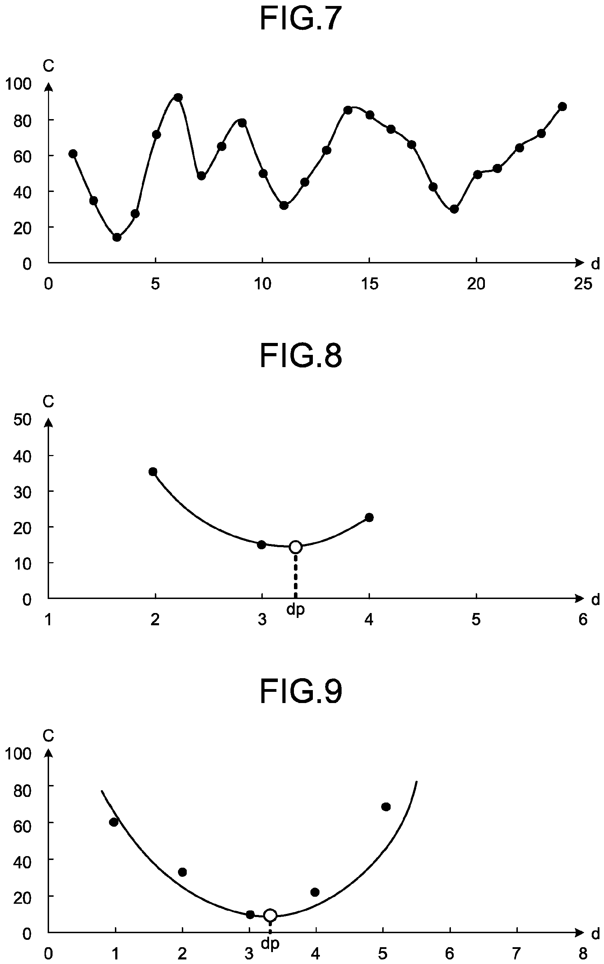

FIG. 5 is a diagram for explaining the principle for deriving a distance from the imaging unit to an object. FIGS. 6A and 6B are diagrams for explaining how to obtain a corresponding pixel in the comparison image with respect to the reference pixel in the reference image. FIG. 7 is a graph illustrating an example of a relationship between a shift amount and a cost value in units of pixels. Cost calculation in disparity calculation performed by the disparity calculating unit 300 of the first embodiment will be described with reference to FIG. 5 to FIG. 7.

First, the principle for deriving a disparity for an object from the stereo camera (the imaging units 10a and 10b) and measuring a distance from the stereo camera to the object based on a disparity value indicating the disparity will be described with reference to FIG. 5. As illustrated in FIG. 5, the imaging units 10a and 10b respectively include the imaging lenses 11a and 11b that refract incident light and form images of an object on the image sensors that are solid-state image sensing devices. The images captured by the imaging unit 10a and the imaging unit 10b are, as described above, the reference image Ia and the comparison image Ib. In FIG. 5, a point S on an object E in a three-dimensional space is mapped at a position on a line that is parallel to a line connecting the imaging lens 11a and the imaging lens 11b in each of the reference image Ia and the comparison image Ib. Here, the points S mapped in the respective images are denoted by a point Sa(x, y) in the reference image Ia and a point Sb(X, y) in the comparison image Ib. At this time, the disparity value dp is represented by Equation (1) below using the point Sa(x, y) in the coordinate plane on the reference image Ia and the point Sb(X, y) in the coordinate plane on the comparison image Ib.

$$dp = X - x \qquad\qquad (1)$$

Further, in FIG. 5, assuming that a distance between the point Sa(x, y) in the reference image Ia and an intersection of a vertical line extending from the imaging lens 11a and the imaging surface is denoted by $\Delta$a, and a distance from the point Sb(X, y) in the comparison image Ib and an intersection of a vertical line extending from the imaging lens 11b and the imaging surface is denoted by $\Delta$b, the disparity value dp is represented by dp = $\Delta$a + $\Delta$b.

Subsequently, a distance Z between the object E and the imaging units 10a and 10b is calculated by using the disparity value dp. Here, the distance Z is a distance from a straight line connecting a focal position of the imaging lens 11a and a focal position of the imaging lens 11b to the point S on the object E. As illustrated in FIG. 5, it is possible to calculate the distance Z based on Equation (2) below using focal lengths f of the imaging lens 11a and the imaging lens 11b, a baseline length B that is a distance between the imaging lens 11a and the imaging lens 11b, and the disparity value dp.

$$Z = (B \times f) / dp \qquad\qquad (2)$$

Equation (2) indicates that the distance Z decreases with an increase in the disparity value dp and the distance Z increases with a decrease in the disparity value dp.

Next, a method of calculating a cost value using block matching (one example of the stereo matching process) will be described with reference to FIGS. 6A, 6B and FIG. 7.

FIG. 6A is a schematic diagram illustrating a reference pixel p and a reference region pb in the reference image Ia, and FIG. 6B is a schematic diagram for calculating the cost value C while sequentially shifting (moving) a candidate corresponding pixel in the comparison image Ib with respect to the reference pixel p illustrated in FIG. 6A. Here, the corresponding pixel indicates a certain pixel that is contained in the comparison image Ib and that is most similar to the reference pixel p in the reference image Ia. Further, the cost value C is an evaluation value (degree of match) indicating similarity or non-similarity of each of the pixels in the comparison image Ib with respect to the reference pixel p in the reference image Ia. In the following description, it is assumed that the cost value C is an evaluation value that indicates non-similarity such that the similarity of a pixel in the comparison image Ib with respect to the reference pixel p increases with a decrease in the cost value C.

As illustrated in FIG. 6A, the cost calculating unit 301 calculates a cost value C(p, d) of a candidate pixel q(x+d, y) that is a candidate for the corresponding pixel with respect to the reference pixel p(x, y), on the basis of the reference pixel p(x, y) in the reference image Ia and on the basis of the luminance value (pixel value) of each candidate corresponding pixel q(x+d, y) present on an epipolar line EL that is based on the reference pixel p(x, y) and that is present in the comparison image Ib. d is a shift amount (amount of deviation) between the reference pixel p and the candidate pixel q, and the shift amount d is shifted in units of pixels. In other words, in FIGS. 6A and 6B, the cost value C(p, d) that is the non-similarity of luminance values between the candidate pixel q(x+d, y) and the reference pixel p(x, y) is calculated while sequentially shifting the candidate pixel q(x+d, y) by one pixel within a range (for example, 0 < d < 25) that is specified in advance.

Further, as a matching process for obtaining the corresponding pixel with respect to the reference pixel p, block matching is performed in the first embodiment. In the block matching, non-similarity between the reference region pb, which is a predetermined region centered at the reference pixel p of the reference image Ia, and a candidate region qb (with the same size as the reference region pb), which is centered at the candidate pixel q of the comparison image Ib. As the cost value C indicating the non-similarity between the reference region pb and the candidate region qb, a sum of absolute difference (SAD), a sum of squared difference (SSD), a zero-mean-sum of squared difference (ZSSD) that is obtained by subtracting an average value of each block from the value of the SSD, or the like may be used. The evaluation value as described above indicates non-similarity because the value decreases with an increase in correlation (with an increase in the degree of similarity).

Meanwhile, as described above, the reference image Ia and the comparison image Ib have a rectified relationship because the imaging units 10a and 10b are arranged in the rectified manner. Therefore, the corresponding pixel in the comparison image Ib corresponding to the reference pixel p in the reference image Ia is present on the epipolar line EL that is illustrated as a line in a horizontal direction in the plane view of FIG. 6, and it is sufficient to search for a pixel on the epipolar line EL in the comparison image Ib to obtain the corresponding pixel in the comparison image Ib.

The cost value C(p, d) that is calculated by the cost calculating unit 301 through the block matching as described above is represented by, for example, the graph illustrated in FIG. 7 in terms of the relationship with the shift amount d. In the example illustrated in FIG. 7, the cost value C has a minimum value when the shift amount d is 3, so that the disparity value dp of 3 is derived. However, in the graph of the cost value C with respect to the shift amount d in units of pixels as illustrated in FIG. 7, it is only possible to derive a value in units of pixels as the disparity value dp. Therefore, as will be described later with reference to FIG. 8 and FIG. 9, the sub-pixel estimating unit 302 performs sub-pixel estimation for estimating and deriving the disparity value dp in a smaller unit (hereinafter, referred to as "in units of pixels or a sub-pixel unit") than a pixel unit, instead of deriving the value in units of pixels as the disparity value dp.

Sub-Pixel Estimation

FIG. 8 is a diagram for explaining sub-pixel estimation using the parabola fitting. FIG. 9 is a diagram for explaining sub-pixel estimation using the least squares method. The sub-pixel estimation in the disparity calculation performed by the disparity calculating unit 300 of the first embodiment will be described below with reference to FIG. 8 and FIG. 9.

First, a case in which the sub-pixel estimating unit 302 performs sub-pixel estimation using the parabola fitting will be described with reference to FIG. 8. The sub-pixel estimating unit 302 obtains a value of the shift amount d for which the cost value C is minimum in the graph of the cost value C (see FIG. 7) calculated by the cost calculating unit 301. In the example in FIG. 7, the cost value C is minimum when the shift amount d is 3. Subsequently, the sub-pixel estimating unit 302 obtains the shift amounts d that are adjacent to the shift amount d of 3. Specifically, the shift amounts d of 2 and 4 are obtained. Subsequently, as illustrated in FIG. 8, the sub-pixel estimating unit 302 obtains a concave-up quadratic curve that passes through three points corresponding to the shift amounts d of 2, 3, and 4 in the graph of the shift amount d and the cost value C illustrated in FIG. 7. Then, the sub-pixel estimating unit 302 estimates, as the disparity value dp, the shift amount d in units of sup-pixels corresponding to a local minimum value of the quadratic curve.

Next, a case in which the sub-pixel estimating unit 302 performs sub-pixel estimation using the least squares method will be described with reference to FIG. 9. The sub-pixel estimating unit 302 obtains a value of the shift amount d for which the cost value C is minimum in the graph of the cost value C (see FIG. 7) calculated by the cost calculating unit 301. In the example in FIG. 7, the cost value C is minimum when the shift amount d is 3. Subsequently, the sub-pixel estimating unit 302 obtains four shift amounts d near the shift amount d of 3. Specifically, the shift amounts d of 1, 2, 4, and 5 are obtained. Subsequently, as illustrated in FIG. 9, the sub-pixel estimating unit 302 obtains a concave-up quadratic curve that passes through five points corresponding to the shift amounts d of 1, 2, 3, 4, and 5 in the graph of the shift amount d and the cost value C illustrated in FIG. 7. Then, the sub-pixel estimating unit 302 estimates, as the disparity value dp, the shift amount d in units of sup-pixels corresponding to a local minimum value of the quadratic curve.

The sub-pixel estimating unit 302 estimates and derives the disparity value dp through the sub-pixel estimation using the parabola fitting as illustrated in FIG. 8 or the sub-pixel estimation using the least squares method as illustrated in FIG. 9. With this operation, it is possible to derive the disparity value dp in a sub-pixel unit that is a smaller unit than a pixel unit, so that it is possible to derive the disparity value dp with high accuracy and precision.

Meanwhile, the sub-pixel estimation is not limited to those using the parabola fitting and the least squares method as described above, and it may be possible to perform the sub-pixel estimation using other methods. For example, the sub-pixel estimating unit 302 may perform the sub-pixel estimation using equiangular linear fitting for estimating the disparity value dp by obtaining, with use of the three points illustrated in FIG. 8, an equiangular line that passes through the three points, instead of using the quadratic curve.

Furthermore, while the quadratic curve is obtained using the five points on the graph illustrated in FIG. 9 in the sub-pixel estimation using the least squares method, the embodiments are not limited to this example, and it may be possible to obtain a quadratic curve using a different number of points.

Moreover, it is not always necessary to calculate the disparity value dp in units of sub-pixels through the sub-pixel estimation performed by the sub-pixel estimating unit 302, but it may be possible to calculate the disparity value dp in units of pixels without performing the sub-pixel estimation. In this case, it is sufficient for the sub-pixel estimating unit 302 to determine, as the disparity value dp, the shift amount d that corresponds to the minimum value of the cost values C of the pixels in the comparison image Ib that is calculated by the cost calculating unit 301 with respect to the the reference pixel in the reference image Ia.

Furthermore, it may be possible to use a method, such as an estimation error cancel method (EEC), for causing an estimated disparity error, which is likely to occur due to the sub-pixel estimation, to occur.

Generation of Disparity Image

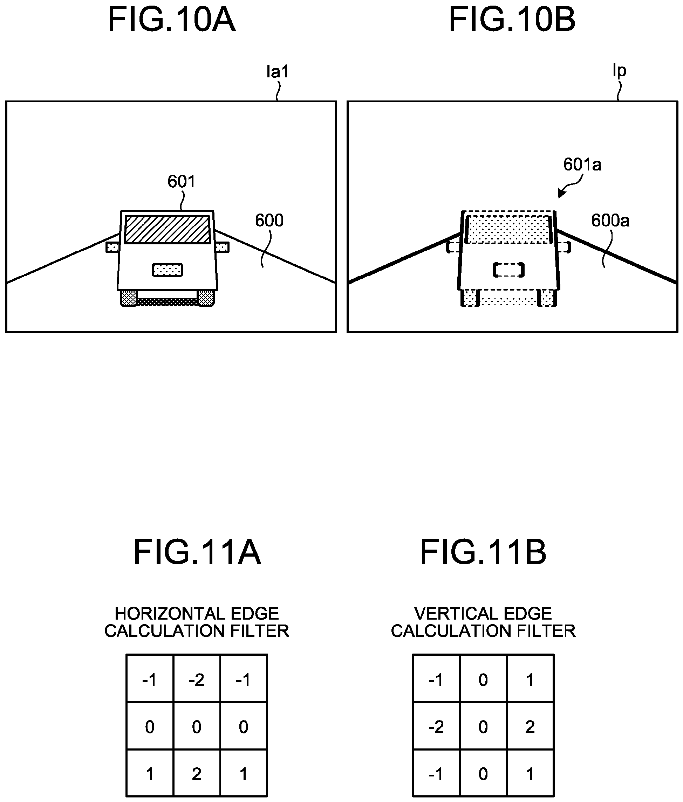

FIGS. 10A and 10B are diagrams illustrating an example of a disparity image that is generated from a captured image. Generation of a disparity image in the disparity calculation performed by the disparity calculating unit 300 of the first embodiment will be described with reference to FIGS. 10A and 10B.

The disparity image generating unit 303 generates a disparity image that is an image in which the luminance value of each of the pixels of the reference image Ia is replaced with the disparity value dp corresponding to each of the pixels, on the basis of the disparity value dp in units of sub-pixels derived by the sub-pixel estimating unit 302. FIG. 10A illustrates a reference image Ia1 that is one example of the reference image Ia, and FIG. 10B is a schematic diagram of a disparity image Ip that is one example of the disparity image generated by the disparity image generating unit 303. In the reference image Ia1 illustrated in FIG. 10A, a road surface 600 and a vehicle 601 appear. The road surface 600 in the reference image Ia1 corresponds to a road surface portion 600a in the disparity image Ip illustrated in FIG. 10A, and the vehicle 601 corresponds to a vehicle portion 601a.

Meanwhile, while the disparity value is obtained using the block matching in the stereo matching process performed by the disparity calculating unit 300 as described above, the embodiments are not limited to this example, and it may be possible to obtain the disparity value using, for example, a semi-global matching (SGM) method.

Furthermore, while the disparity image generating unit 303 generates the disparity image, it may be possible to generate an image using distance information that is obtained by converting the disparity to a distance, instead of using information on the disparity. Moreover, the disparity image generating unit 303 need not always generate information in the form of an image, but may generate disparity information or distance information in other forms instead of in the form of an image.

When the disparity value is derived based on the block matching as described above, as illustrated in FIG. 10B, disparities (solid line portions in FIG. 10B) in edge portions extending in the vertical direction (hereinafter, may be simply referred to as "vertical edges" in some cases) tend to be obtained with adequate accuracy, and the number of disparity points (pixels having effective disparity values) is large. In contrast, as a problem with the disparity calculation using the block matching, it is frequently difficult to calculate disparities in edge portions extending in the horizontal direction and portions in which the luminance change is small. Therefore, as will be described later with reference to FIG. 11A to FIG. 15, in the first embodiment, disparities in edges extending in the horizontal direction (hereinafter, may be simply referred to as "horizontal edges" in some cases) are obtained using the reference image Ia that is a luminance image.

Clustering Process

Extraction of Edges

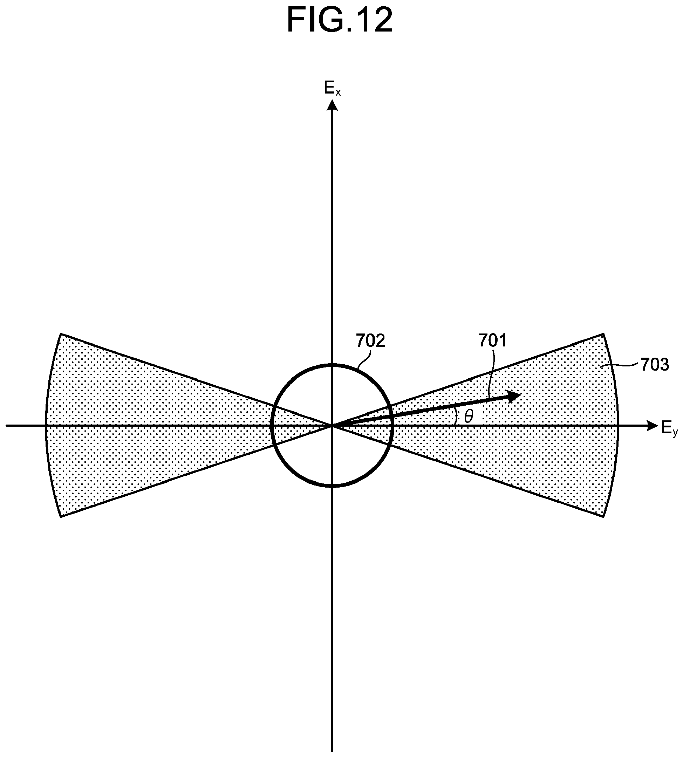

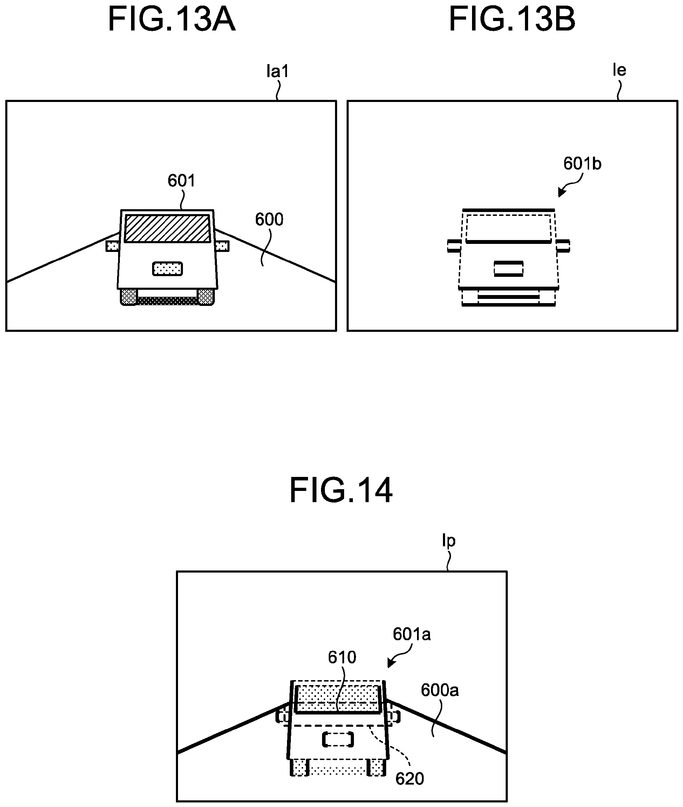

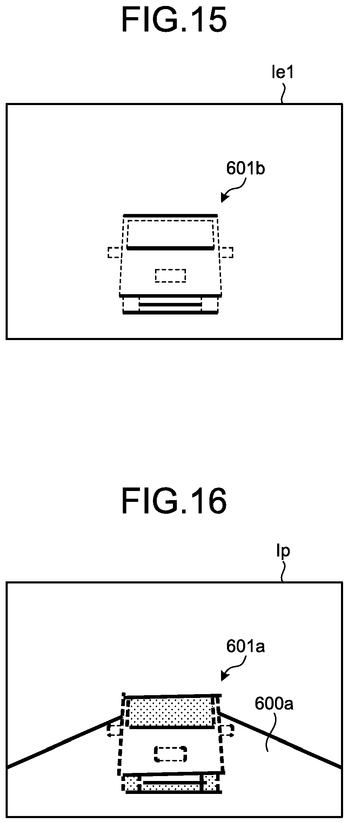

FIGS. 11A and 11B are diagrams illustrating examples of calculation filters for detecting edges. FIG. 12 is a diagram for explaining determination of a horizontal edge. FIGS. 13A and 13B are diagrams illustrating an example of an edge image indicating horizontal edges obtained from a luminance image. FIG. 14 is a diagram for explaining how to obtain a distance to a horizontal line on a vehicle. FIG. 15 is a diagram illustrating an example of an edge image obtained by excluding short horizontal edges. Edge extraction operation in a clustering process performed by the clustering unit 400 of the first embodiment will be described with reference to FIG. 11A to FIG. 15.

First, the edge extracting unit 401 of the clustering unit 400 calculates a strength $E_y$ related to an edge of a target pixel in the horizontal direction and a strength $E_x$ related to an edge of the target pixel in the vertical direction by using, for example, the Sobel filters as illustrated in FIG. 11, with respect to each of the pixel values (luminance values) of the reference image Ia input from the the converting unit 200a. A filter illustrated in FIG. 11A is a calculation filter (the Sobel filter) for obtaining the strength $E_y$ related to the edge of the target pixel in the horizontal direction, and the strength $E_y$ is obtained by multiplying the pixel values of eight pixels around the target pixel by coefficients of the filter and obtaining a sum of the products. Further, the filter illustrated in FIG. 11B is a calculation filter (the Sobel filter) for obtaining the strength $E_x$ related to the edge of the target pixel in the vertical direction, and the strength $E_x$ is obtained by multiplying the pixel values of eight pixels around the target pixel by coefficients of the filter and obtaining a sum of the products. Meanwhile, the coefficients and filter sizes of the Sobel filters illustrated in FIGS. 11A and 11B are mere examples.

Then, the edge extracting unit 401 calculates an edge strength E (change amount) for the target pixel from the calculated strengths $E_y$ and $E_x$ using Equation (3) below.

$$E = \sqrt{E_x^2 + E_y^2} \qquad (3)$$

Furthermore, the edge extracting unit 401 calculates an edge direction θ (change direction) at the target pixel from the calculated strengths $E_y$ and $E_x$ using Equation (4) below.

$$\theta = \tan^{-1} \frac{E_x}{E_y} \qquad (4)$$

Then, if the edge strength E of the target pixel is equal to or larger than a predetermined threshold and the edge direction θ of the target pixel is within a predetermined angular range with respect to the horizontal direction, the edge extracting unit 401 determines that the target pixel is a pixel constituting a horizontal edge (hereinafter, may be simply referred to as a "horizontal edge pixel"). Specifically, whether the edge strength E of the target pixel is equal to or larger than the predetermined threshold is determined by determining whether the length of an arrow 701 illustrated in FIG. 12 is equal to or larger than a circular strength range 702 with a radius that corresponds to the threshold. Furthermore, whether the edge direction θ of the target pixel is within the predetermined range with respect to the horizontal direction is determined by determining whether the direction of the arrow 701 illustrated in FIG. 12 is within a range of a horizontal edge area 703. In other words, the edge extracting unit 401 is able to prevent the influence of noise by using only pixels for which the edge strengths E are equal to or larger than the predetermined threshold, and regards pixels for which the edge directions θ are within the predetermined range with respect to the horizontal direction as the horizontal edge pixels.

With the method as described above, the edge extracting unit 401 obtains an edge image (for example, an edge image Ie illustrated in FIG. 13B) constituted of the horizontal edge pixels from the reference image Ia (for example, the reference image Ia1 illustrated in FIG. 13A). The vehicle 601 in the reference image Ia1 illustrated in FIG. 13A corresponds to a vehicle portion 601b in the edge image Ie illustrated in FIG. 13B. Meanwhile, while the edge image obtained by the edge extracting unit 401 is constituted of the horizontal edge pixels as described above, the pixel values of the horizontal edge pixels may be set to arbitrary values that indicate the horizontal edge pixels, such as the pixel values of the reference image Ia corresponding to the respective horizontal edge pixels or the values of the edge strengths E calculated by the edge extracting unit 401.

Furthermore, as illustrated in FIG. 13B, the edge extracting unit 401 extracts, as horizontal edges, clusters of horizontal edge pixels that are adjacent to each other in the horizontal direction in the edge image. Meanwhile, it is not always necessary to extract horizontal edge pixels that are exactly adjacent to each other as a horizontal edge cluster. For example, when horizontal edge pixels are located near each other on the same horizontal line, such as when some horizontal edge pixels are missing in the same horizontal line, it may be possible to handle the horizontal edge pixels as a horizontal edge cluster. Specifically, if an interval between the horizontal edge pixels is equal to or smaller than a certain interval that corresponds to a predetermined number of pixels (within a predetermined interval), it may be possible to include the corresponding horizontal edge pixels in the same horizontal edge cluster.

Furthermore, when an object is to be detected using the extracted horizontal edges, and if all of the horizontal edges are used, noise is increased and the possibility of error detection increases. Therefore, the edge extracting unit 401 regards a short horizontal edge that is equal to or shorter than a predetermined length (one example of a predetermined condition) as noise, and excludes the horizontal edge from being used in object detection to be performed in the subsequent stage. With this operation, it is possible to prevent error in object detection.

Here, one example of a method of calculating the number of pixels that correspond to a width of a vehicle on an image in accordance with an actual distance to the vehicle will be descried. Assuming that a width of a normal vehicle is 1700 millimeters (mm), a focal length of the imaging unit 10a (10b) is denoted by f (mm), and a cell pitch of the image sensor 13a (13b) is denoted by cp (mm/pix), a width W (pix) of a vehicle that appears at a distance Dist (mm) on an image is calculated by Equation (5) below.

$$W = \frac{1700 \times f}{Dist \times cp}$$

$$(5)$$

Then, the edge extracting unit 401 sets a threshold based on the width W (pix) that is calculated using Equation (5), determines a horizontal edge with a length that is shorter than the threshold (the number of pixels) as a portion other than the vehicle, and excludes the determined horizontal edge from being used in vehicle detection to be performed in the subsequent stage.

Furthermore, the distance Dist as described above may be set to a maximum distance that is obtained from the disparity value corresponding to a target horizontal edge or may be calculated based on disparity values around the horizontal edge, for example. As a method of calculating the distance based on the disparity values around the horizontal edge, for example, a calculation area 620 including a target horizontal edge 610 (which is superimposed on the disparity image Ip for the purpose of convenience) is set in the disparity image Ip as illustrated in FIG. 14. Then, a distance that is obtained from an average value of the disparity values included in the calculation area 620 is used as the distance Dist.

An edge image Ie1 illustrated in FIG. 15 is an example of an edge image that is obtained when the edge extracting unit 401 determines and excludes horizontal edges of portions other than the vehicle. In the edge image Ie1 illustrated in FIG. 15, horizontal edges corresponding to side mirrors and a license plate are removed as compared to the edge image Ie illustrated in FIG. 13B.

Through the operation as described above, the edge extracting unit 401 obtains an edge image indicating horizontal edges of a vehicle from the reference image Ia (and the disparity image).

Derivation of Rectangle representing Object Detection Region

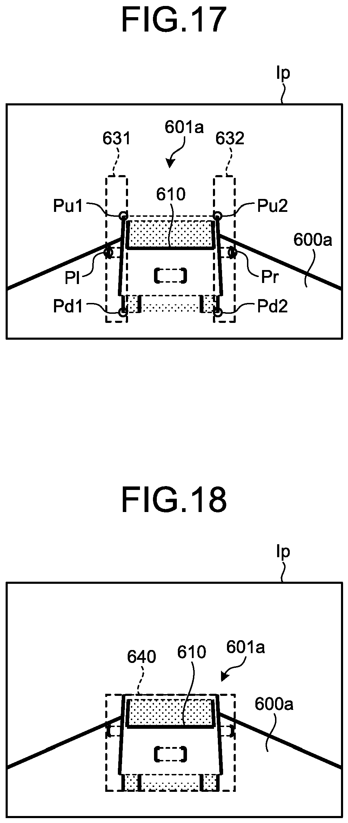

FIG. 16 is a diagram illustrating an example in which horizontal edges are superimposed on the disparity image. FIG. 17 is a diagram illustrating a left-side region and a right-side region for obtaining a rectangle representing a vehicle detection region from a horizontal edge in the disparity image. FIG. 18 is a diagram illustrating an example of the rectangle representing the vehicle detection region. Operation of deriving a rectangle representing the object detection region in the clustering process performed by the clustering unit 400 of the first embodiment will be described with reference to FIG. 16 to FIG. 18.

FIG. 16 illustrates a state in which the edge image Ie1 obtained by the edge extracting unit 401 is superimposed on the disparity image Ip generated by the disparity calculating unit 300. In FIG. 16, for the purpose of convenience, portions of pixels with disparity values are indicated by thick dashed lines, and horizontal edge portions are indicated by thick solid lines. As illustrated in FIG. 16, a vehicle object includes a rear bumper, a rear window, a hood, and a shadow of a vehicle body; therefore horizontal edges are present inside the object on the image and effective disparity values are likely to be obtained in boundary portions between the vehicle and a background. Then, the object detecting unit 402 obtains a rectangle serving as a detection region for the object (the vehicle in this example) by using the horizontal edges extracted by the edge extracting unit 401 and the disparity image input from the disparity image generating unit 303.

Specifically, as illustrated in FIG. 17, the object detecting unit 402 sets a left-side region 631 (one example of a first region) and a right-side region 632 (one example of the first region), which extend in the vertical direction around both end points of a specific horizontal edge (the horizontal edge 610 in the example in FIG. 17) (hereinafter, may be simply referred to as a "target horizontal edge" in some cases) among the extracted horizontal edges. As for the regions extending in the vertical direction around the both end points of the target horizontal edge, for example, the heights in the vertical direction may be set to a length that covers an actual height of the vehicle, and the widths in the horizontal direction may be set to a width of the block (the reference region pb) used in the block matching. Meanwhile, the left-side region 631 and the right-side region 632 are not limited to vertical rectangular regions as illustrated in FIG. 17, but may be regions that are elongated in a vertically oblique direction or may be elliptical regions that are elongated in the vertical direction, for example.

Then, the object detecting unit 402 scans disparity points in the left-side region 631 to thereby specify an upper edge point Pu1, a left edge point Pl, and a lower edge point Pd1, and scans disparity points in the right-side region 632 to thereby specify an upper edge point Pu2, a right edge point Pr, and a lower edge point Pd2. Subsequently, the object detecting unit 402 determines, as the object detection region, a rectangle (a rectangle 640 illustrated in FIG. 18) (one example of a second region) that is enclosed by connecting a lower point (or higher point) between the upper edge point Pu1 and the upper edge point Pu2, a higher point (or lower point) between the lower edge point Pd1 and the lower edge point Pd2, the left edge point Pl, and the right edge point Pr. Meanwhile, while the left-side region 631 and the right-side region 632 have rectangular shapes, the embodiments are not limited to this example, and may have different shapes. Furthermore, the object detection region determined by the object detecting unit 402 is not limited to a rectangle, but it may be possible to adopt a region with other shapes that are based on the specified edge points (one example of the second region).

While the object detecting unit 402 determines a rectangle representing the object detection region by using a specific horizontal edge among a plurality of horizontal edges extracted by the edge extracting unit 401, the specific horizontal edge may be determined, for example, as described below. For example, a longest horizontal edge, a horizontal edge that is the closest to the length of a normal vehicle, or the like among the extracted horizontal edges may be determined as the specific edge. Alternatively, it may be possible to obtain an average position in the height direction and an average length in the horizontal direction with respect to the extracted horizontal edges, and determine a horizontal edge that is present at the average position and that has the average length as the specific edge.

Furthermore, while each of the edge points is specified by using all of the disparity points included in the left-side region 631 and the right-side region 632 as targets, the embodiments are not limited to this example. For example, it may be possible to determine a distance range from disparity values of the disparity points that are included in the left-side region 631 and the right-side region 632, and specify each of the edge points by using only the disparity values of the disparity points that are included in the distance range. With this operation, it is possible to determine a rectangle representing the object detection region in a robust manner with respect to noise and disparities of a background.

Moreover, if disparity values near the both ends of the extracted horizontal edge is different by a predetermined value or larger (one example of the predetermined condition) between the left side and the right side, the edge extracting unit 401 may determine that the horizontal edge does not belong to an object (for example, a vehicle) and exclude the horizontal edge. In this manner, by using the disparity values of the disparity image in addition to the luminance values of the reference image Ia, it is possible to improve the accuracy of extraction of horizontal edges.

Furthermore, the object detecting unit 402 may apply a template that is a model of an object to an image (recognition image) in a rectangle that is determined as a detection region for an object (for example, a vehicle), and compare the recognition image and the template. If it is determined that the object represented by the recognition image does not match the object of the template as a result of comparison, it may be possible to reject the rectangle. With this operation, it is possible to prevent error detection of other objects (for example, an artificial material, such as a signboard on a road) that are different from a detection target object. Furthermore, when the template that is a model of an object is used, and if the edge extracting unit 401 extracts a plurality of horizontal edges, the object detecting unit 402 may obtain a rectangle for each of the horizontal edges, compare an image in each of the rectangles with the template, and determine a rectangle that has the image closest to the template as the object detection region.

Flow of Object Recognition Process

Flow of Stereo Matching Process

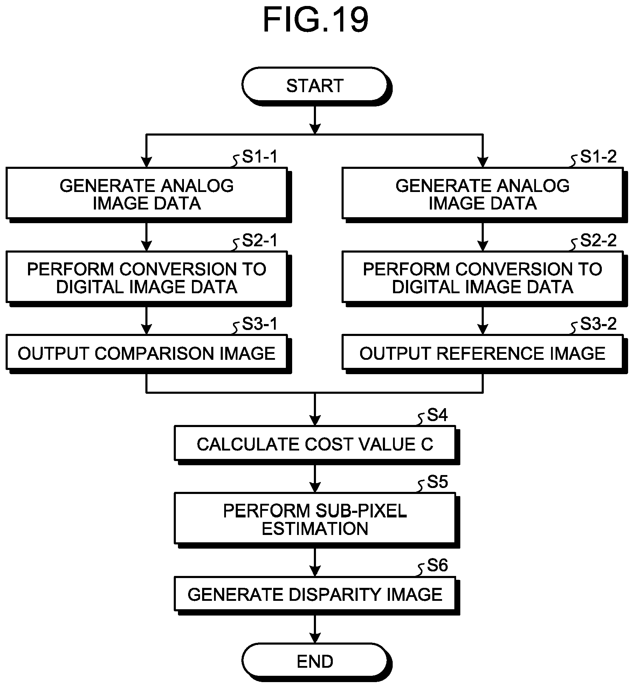

FIG. 19 is a flowchart illustrating an example of the stereo matching process performed by the object recognition device according to the first embodiment. The flow of the stereo matching process performed by the object recognition device 1 according to the first embodiment will be described with reference to FIG. 19.

Step S1-1

The image acquiring unit 100b captures an image of an object ahead by using the left-side camera, generates an analog image signal, and obtains a luminance image that is an image (captured image) based on the image signal. With this operation, the image signal to be subjected to image processing in the subsequent stage is obtained. Then, the process proceeds to Step S2-1.

Step S1-2

The image acquiring unit 100a captures an image of an object ahead by using the right-side camera, generates an analog image signal, and obtains a luminance image that is an image (captured image) based on the image signal. With this operation, the image signal to be subjected to image processing in the subsequent stage is obtained. Then, the process proceeds to Step S2-2.

Step S2-1

The converting unit 200b removes noise or the like from the image data of the luminance image obtained by the image acquiring unit 100b, and performs conversion on the image data to generate the comparison image Ib that is image data in the digital format. In this manner, by converting the image data to the image data in the digital format, it becomes possible to perform image processing on each of pixels of an image that is based on the image data. Then, the process proceeds to Step S3-1.

Step S2-2

The converting unit 200a removes noise or the like from the image data of the luminance image obtained by the image acquiring unit 100a, and performs conversion on the image data to generate the reference image Ia that is image data in the digital format. In this manner, by converting the image data to the image data in the digital format, it becomes possible to perform image processing on each of pixels of an image that is based on the image data. Then, the process proceeds to Step S3-2.

Step S3-1

The converting unit 200b outputs the comparison image Ib, which is the image data in the digital format generated at Step S2-1, to the disparity calculating unit 300. With this operation, the image to be compared for obtaining a disparity value in the block matching is obtained. Then, the process proceeds to Step S4.

Step S3-2

The converting unit 200a outputs the reference image Ia, which is the image data in the digital format generated at Step S2-2, to the disparity calculating unit 300. With this operation, the image to be compared for obtaining a disparity value in the block matching is obtained. Then, the process proceeds to Step S4.

Step S4

The cost calculating unit 301 of the disparity calculating unit 300 calculates the cost value C(p, d) of each candidate pixel q(x+d, y), on the basis of the luminance value of the reference pixel p(x, y) in the reference image Ia and on the basis of the luminance value (pixel value) of each candidate pixel q(x+d, y), which is a candidate corresponding pixel and specified by shifting a pixel corresponding to the position of the reference pixel p(x, y) by the shift amount d on the epipolar line EL that is based on the reference pixel p(x, y) and that is present in the comparison image Ib. Specifically, the cost calculating unit 301 calculates, as the cost value C, non-similarity between the reference region pb, which is a predetermined region centered at the reference pixel p of the reference image Ia, and the candidate region qb (with the same size as the reference region pb), which is centered at the candidate pixel q of the comparison image Ib, using the block matching. Then, the process proceeds to Step S5.

Step S5

The sub-pixel estimating unit 302 of the disparity calculating unit 300 performs the sub-pixel estimation based on the shift amount d corresponding to a minimum value of the cost values C of the pixels in the comparison image Ib with respect to the reference pixel in the reference image Ia and based on the cost values C at positions corresponding to the adjacent shift amounts d, where the cost values C are calculated by the cost calculating unit 301. Subsequently, the sub-pixel estimating unit 302 obtains the disparity value dp in units of sub-pixels. Then, the process proceeds to Step S6.

Step S6

The disparity image generating unit 303 of the disparity calculating unit 300 generates a disparity image that is an image in which the luminance value of each of the pixels of the reference image Ia is replaced with the disparity value dp corresponding to each of the pixels, on the basis of the disparity value dp in units of sub-pixels derived by the sub-pixel estimating unit 302.
Through the flow of the processes from Step S1 to S6 as described above, the object recognition device 1 performs the stereo matching process.

Flow of Clustering Process

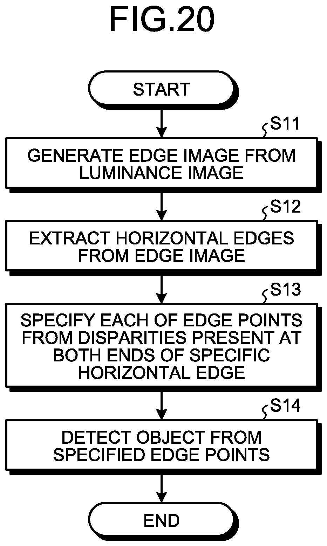

FIG. 20 is a flowchart illustrating an example of the clustering process performed by the object recognition device according to the first embodiment. The flow of the clustering process performed by the object recognition device 1 according to the first embodiment will be described with reference to FIG. 20.

Step S11

The edge extracting unit 401 of the clustering unit 400 calculates the edge strength E and the edge direction θ with respect to each of the pixel values of the reference image Ia, determines whether each of the pixels is the horizontal edge pixel, and generates an edge image that is constituted of the horizontal edge pixels. Then, the process proceeds to Step S12.

Step S12

The edge extracting unit 401 extracts clusters of horizontal edge pixels that are adjacent to each other in the horizontal direction in the edge image as horizontal edges. Further, the edge extracting unit 401 excludes a short horizontal edge that is equal to or shorter than a predetermined length as noise. Then, the process proceeds to Step S13.

Step S13

The object detecting unit 402 of the clustering unit 400 determines a specific horizontal edge among the horizontal edges extracted by the edge extracting unit 401 as a target horizontal edge, and sets the left-side region 631 and the right-side region 632 that extend in the vertical direction around the both end points of the target horizontal edge. Subsequently, the object detecting unit 402 scans disparity points in the left-side region 631 to thereby specify the upper edge point Pu1, the left edge point Pl, and the lower edge point Pd1, and scans disparity points in the right-side region 632 to thereby specify the upper edge point Pu2, the right edge point Pr, and the lower edge point Pd2. Then, the process proceeds to Step S14.

Step S14

The object detecting unit 402 determines, as the object detection region, a rectangle (the rectangle 640 illustrated in FIG. 18) that is enclosed by connecting a lower point (or higher point) between the upper edge point Pu1 and the upper edge point Pu2, a higher point (or lower point) between the lower edge point Pd1 and the lower edge point Pd2, the left edge point Pl, and the right edge point Pr. In this manner, by causing the object detecting unit 402 to determine the rectangle as the object detection region, it is possible to detect the object.

Through the flow of the processes from Step S11 to S14 as described above, the object recognition device 1 performs the clustering process.

As described above, the object recognition device 1 according to the first embodiment extracts a horizontal edge from the reference image Ia that is a luminance image, and specifies each of the edge points of the rectangle representing the object detection region on the basis of disparity values that are included in the left-side region and the right-side region that extend in the vertical direction at the both ends of the horizontal edge. In this manner, by using the characteristics of the luminance image in which edges in the horizontal direction are easily obtained and the characteristics of the disparity image in which portions where effective disparity values are arranged in the vertical direction (vertical direction) are easily obtained, a rectangle representing the object detection region is determined. Therefore, it is possible to prevent detection of an object in a space where nothing exists, which happens in the technique described in Japanese Patent No. 4123138 as mentioned above, and it is possible to detect an object with high accuracy.

Furthermore, in the conventional object recognition processes, many techniques of generating a V-disparity map for estimating a road surface shape from a disparity image, and generating a U-disparity map, a real U-disparity map, or the like for recognizing an object using only information located above the estimated road surface shape have been proposed. However, the object recognition device 1 according to the first embodiment need not estimate a road surface shape by generating a V-disparity map, and need not further generate a U-disparity map, a real U-disparity map, and the like, so that it is possible to detect an object at a high speed.

Second Embodiment

An object recognition device according to a second embodiment will be described, mainly in terms of a difference from the object recognition device 1 according to the first embodiment. In the first embodiment, a rectangle representing the object detection region is obtained using a specific horizontal edge among a plurality of extracted horizontal edges. In the second embodiment, operation of obtaining a rectangle representing the object detection region using each of the extracted horizontal edges will be described. Meanwhile, a hardware configuration of the object recognition device according to the second embodiment is the same as that of the first embodiment.

Functional Block Configuration and Operation of Object Recognition Device

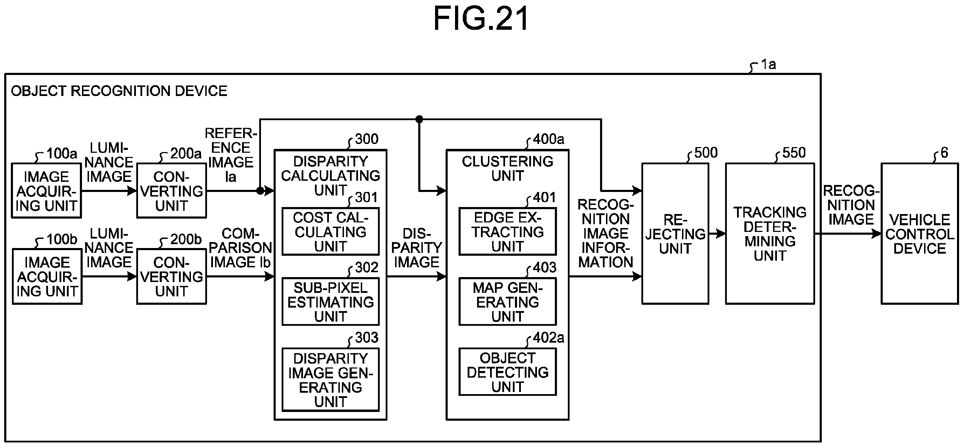

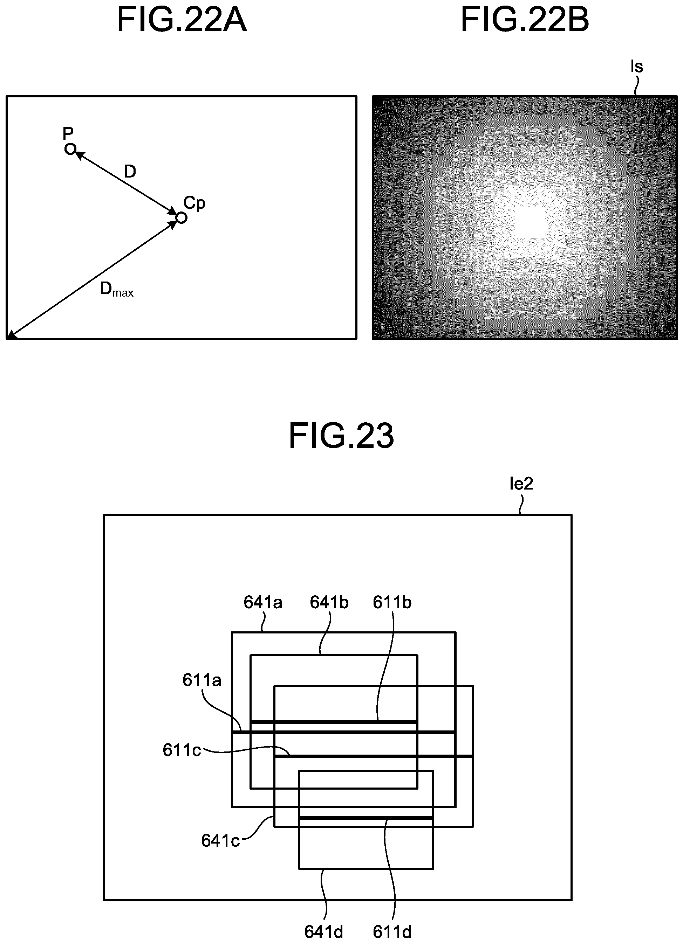

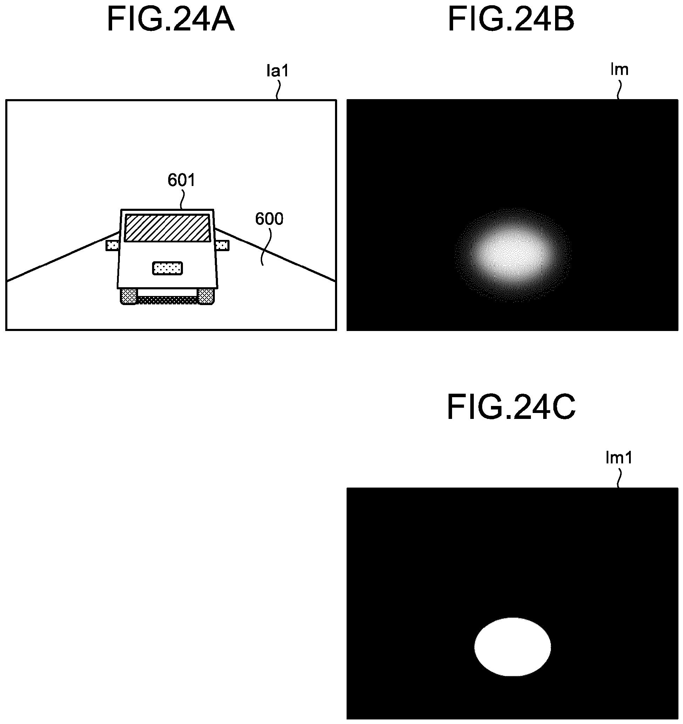

FIG. 21 is a diagram illustrating an example of a functional block configuration of the object recognition device according to the second embodiment. FIGS. 22A and 22B are diagrams for explaining how to obtain a score in a rectangle. FIG. 23 is a diagram illustrating an example of a group of rectangles that are obtained in an edge image. FIGS. 24A, 24B, and 24C are diagrams illustrating an example of a conspicuity map that is generated from scores in each of rectangles. A functional block configuration and operation of an object recognition device 1a according to the second embodiment will be described with reference to FIG. 21 to FIG. 24C.

As illustrated in FIG. 21, the object recognition device 1a according to the second embodiment includes the image acquiring units 100a and 100b, the converting units 200a and 200b, the disparity calculating unit 300 (one example of an image acquiring unit), a clustering unit 400a (one example of the image acquiring unit), the rejecting unit 500, and the tracking determining unit 550. Functions of the image acquiring units 100a and 100b, the converting units 200a and 200b, the disparity calculating unit 300, the rejecting unit 500, and the tracking determining unit 550 are the same as the functions described in the first embodiment.

The clustering unit 400a is a functional unit that detects an object appearing in the disparity image on the basis of the reference image received from the converting unit 200a and the disparity image received from the disparity calculating unit 300. As illustrated in FIG. 21, the clustering unit 400a includes the edge extracting unit 401, an object detecting unit 402a (detecting unit), and a map generating unit 403 (generating unit). Meanwhile, functions of the edge extracting unit 401 are the same as those of the edge extracting unit 401 of the first embodiment.

The map generating unit 403 is a functional unit that determines a rectangle for each of the horizontal edges extracted by the edge extracting unit 401, sets a score in each of the rectangles such that the score increases as the rectangle is located at a position that attracts more attention of persons, and generates a conspicuity map based on the score that is set in each of the rectangles. Here, the conspicuity map represents the degree of attention in the image by a heat map by calculating positions that attract more attentions of persons when the persons view the image on the basis of a feature of the image.

Specifically, the map generating unit 403 specifies each of edge points for each of the horizontal edges extracted by the edge extracting unit 401 by the same method as used by the object detecting unit 402 of the first embodiment, and determines rectangles based on each of the edge points. Subsequently, as illustrated in FIG. 22(a), the map generating unit 403 sets a score SCR represented by Equation (6) below with respect to each of the pixels included in each of the determined rectangles. As indicated by Equation (6), the score is set such that the score increases toward the center of the rectangle and approaches zero toward the periphery.

$$SCR = \left( 1 - \frac{\left( D - D_{\min} \right)}{\left( D_{\max} - D_{\min} \right)} \right) \times SCR_{\max} \tag{6}$$

In FIG. 22A, Cp denotes the center of a rectangle, P denotes a pixel for which a score is to be calculated, D denotes a distance between the pixel P and the center Cp, and $D_{\max}$ is a maximum distance that is available as the distance to the center Cp. Further, in Equation (6), $D_{\min}$ is a minimum distance that is available as the distance to the center Cp, and $SCR_{\max}$ is a maximum score. The maximum score $SCR_{\max}$ can be set to an arbitrary value, and, for example, when $SCR_{\max}$ is set to 1, the value of the score SCR becomes equal to or smaller than 1. FIG. 22B illustrates an example in which the scores SCR are set to pixels in a specific rectangle as a result of setting the scores SCR in each of images included in each of the rectangles as described above. A score image Is illustrated in FIG. 22B is an image in which a color approaches white with an increase in the value of the score SCR.

Furthermore, FIG. 23 illustrates an example of an edge image including a plurality of horizontal edges extracted by the edge extracting unit 401. In the edge image Ie2 illustrated in FIG. 23, horizontal edges 611a to 611d are extracted as the plurality of horizontal edges, and rectangles 641a to 641d are determined for the respective horizontal edges 611a to 611d by the map generating unit 403. Then, the map generating unit 403 sets scores as described above with respect to each of the rectangles 641a to 641d. Moreover, rectangles that are determined for respective horizontal edges that are extracted for a single vehicle are settled at similar positions, and therefore, the rectangles overlap with one another as illustrated in FIG. 23.

Then, after setting the scores for each of the determined rectangles, the map generating unit 403 adds values of the scores of all of the rectangles corresponding to each of the pixels of the reference image Ia, and generates a conspicuity map by setting conclusive total scores for the pixels. FIGS. 24A, 24B, and 24C illustrate an example of the conspicuity map. FIG. 24A illustrates the reference image Ia1 that is a basis for generating the conspicuity map, and FIG. 24B illustrates a conspicuity map Im that is generated using each of the rectangles that are determined based on the plurality of horizontal edges extracted from the reference image Ia1. As illustrated in FIG. 24B, if the conspicuity map Im is generated using all of the rectangles, the scores (total scores) in the portion near the center of the vehicle 601 illustrated in the reference image Ia1 have the highest values, and the values (total scores) decrease toward the periphery.

The object detecting unit 402a is a functional unit that performs a binary process on the conspicuity map generated by the map generating unit 403, obtains a rectangle that is circumscribed with a portion where values remain (hereinafter, may be referred to as a "circumscribed rectangle" in some cases), and determines the circumscribed rectangle as the object detection region. FIG. 24C illustrates an example of a conspicuity map Im1 that is obtained by performing the binary process on the total scores of the pixels of the conspicuity map Im. In the example illustrated in FIG. 24C, the object detecting unit 402a performs the binary process, and obtains a circumscribed rectangle that is circumscribed with a portion where values remain (elliptical portion). Meanwhile, the object detection region determined by the object detecting unit 402a is not limited to the circumscribed rectangle as described above, and it is possible to adopt any region that is determined based on the values (total scores) of the conspicuity map.

Then, the clustering unit 400a outputs recognition image information related to an image of the detected object (an image in the circumscribed rectangle obtained by the object detecting unit 402a) (recognition image) to the rejecting unit 500.

Each of the clustering unit 400a, the rejecting unit 500, and the tracking determining unit 550 of the object recognition device 1a illustrated in FIG. 21 is implemented by causing the CPU 32 illustrated in FIG. 3 to execute a program (object recognition processing program). Meanwhile, a part or all of the clustering unit 400a, the rejecting unit 500, and the tracking determining unit 550 may be implemented by the FPGA 31 that is a hardware circuit or other hardware circuits (an ASIC or the like).

Furthermore, the "image processing apparatus" according to the present invention may be a processing unit that includes the disparity calculating unit 300 and the clustering unit 400a, or may be the information processing unit 30 that includes this processing unit.

Moreover, each of the functional units of the object recognition device 1a illustrated in FIG. 21 is presented to schematically illustrate the functions, and need not always be configured in the same manner. For example, a plurality of independent functional units of the object recognition device 1a illustrated in FIG. 21 may be configured as a single functional unit. Alternatively, functions included in a single functional unit of the object recognition device 1a illustrated in FIG. 21 may be divided into a plurality of parts and configured as a plurality of functional units.

Flow of Clustering Process

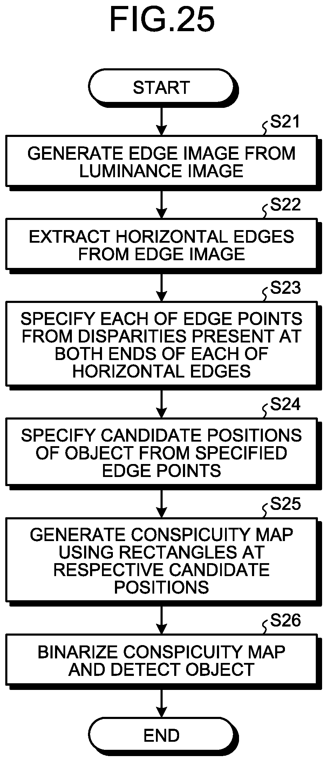

FIG. 25 is a flowchart illustrating an example of the clustering process performed by the object recognition device according to the second embodiment. The flow of the clustering process performed by the object recognition device 1a according to the second embodiment will be described with reference to FIG. 25.

Step S21

The edge extracting unit 401 of the clustering unit 400a calculates the edge strength E and the edge direction $\theta$ with respect to each of the pixel values of the reference image Ia, determines whether each of the pixels is the horizontal edge pixel, and generates an edge image that is constituted of the horizontal edge pixels. Then, the process proceeds to Step S22.

Step S22

The edge extracting unit 401 extracts clusters of horizontal edge pixels that are adjacent to each other in the horizontal direction in the edge image as horizontal edges. Further, the edge extracting unit 401 excludes a short horizontal edge that is equal to or shorter than a predetermined length as noise. Then, the process proceeds to Step S23.

Step S23

The map generating unit 403 of the clustering unit 400a sets the left-side region and the right-side region, which extend in the vertical direction around the both end points of each of the horizontal edges extracted by the edge extracting unit 401, and specifies each of edge points of each of the regions based on disparity points included in each of the regions. Then, the process proceeds to Step S24.

Step S24

The map generating unit 403 determines a rectangle corresponding to each of the horizontal edges from the specified edge points. Each of the rectangles determined by the map generating unit 403 is specified as a candidate position at which an object may be detected. Then, the process proceeds to Step S25.

Step S25

The map generating unit 403 sets scores for each of the determined rectangles, adds values of the scores of all of the rectangles corresponding to each of the pixels of the reference image Ia, and generates a conspicuity map by setting conclusive total scores for the pixels. Then, the process proceeds to Step S26.

Step S26

The object detecting unit 402a of the clustering unit 400a performs a binary process on the conspicuity map generated by the map generating unit 403, obtains a circumscribed rectangle that is circumscribed with a portion in which values remain, and determines the circumscribed rectangle as the object detection region. In this manner, by determining the circumscribed rectangle serving as the object detection region by the object detecting unit 402a, it is possible to detect the object.

Through the flow of the processes from Step S21 to S26 as described above, the object recognition device 1a performs the clustering process.

As described above, the object recognition device 1a according to the second embodiment extracts horizontal edges from the reference image Ia that is a luminance image, determines a rectangle corresponding to each of the horizontal edges, sets scores for each of the determined rectangles, adds values of the scores of all of the rectangles corresponding to each of the pixels of the reference image Ia, and generates a conspicuity map by setting conclusive total scores for the pixels. Furthermore, the object recognition device 1a performs a binary process on the generated conspicuity map, obtains a circumscribed rectangle that is circumscribed with a portion in which values remain, and determines the circumscribed rectangle as the object detection region. In this manner, by generating the conspicuity map using the rectangles that are determined for the respective extracted horizontal edges, and obtaining the circumscribed rectangle as the object detection region, it is possible to further improve the accuracy in object detection as compared with the first embodiment in which a specific horizontal edge is used.

Moreover, while the object recognition device that is mounted on an automobile such as the vehicle 70 has been described in each of the embodiments as described above, the embodiments are not limited to this example. For example, it may be possible to mount the object recognition device on other vehicles, such as a motorbike, a bicycle, a wheelchair, or an agricultural cultivator, as examples of other vehicles. Furthermore, it may be possible to mount the object recognition device on other movable bodies, such as a robot, instead of the vehicle that is one example of the movable body.

In each of the embodiments as described above, when at least any of the functional units of the information processing unit 30 of the object recognition device is implemented by executing a program, the program is provided by being incorporated in a ROM or the like in advance. Furthermore, the program executed by the object recognition device in each of the embodiments as described above may be configured so as to be provided by being recorded in a computer readable recording medium, such as a compact disc ROM (CD-ROM), a flexible disk (FD), a compact disc recordable (CD-R), or a digital versatile disc (DVD), in a computer-installable or computer-executable file format. Moreover, the program executed by the object recognition device in each of the embodiments as described above may be stored in a computer connected to a network, such as the Internet, and configured so as to be provided by downloading via the network. Furthermore, the program executed by the object recognition device in each of the embodiments as described above may be configured so as to be provided or distributed via a network, such as the Internet. Moreover, the program executed by the object recognition device in each of the embodiments as described above has a module structure including at least any of the functional units as described above. As actual hardware, the CPU 32 reads a program from the ROM 33 and executes the program, so that each of the functional unit as described above is loaded and generated on the main storage device (the RAM 34 or the like).

According to the embodiments, it is possible to detect an object at a high speed and with high accuracy without estimating a road surface shape and generating a look-down view image.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

**Claims**

1. An image processing apparatus (30) comprising:

    an image acquiring unit (100a, 100b) configured to acquire, as a luminance image, any of an image that is captured by a first imaging unit and an image that is captured by a second imaging unit, the first imaging unit and the second imaging unit imaging an object;

a distance calculating unit (300) configured to calculate distance information based on the images that are captured by the first imaging unit and the second imaging unit;

an edge extracting unit (401) configured to extract a horizontal edge from the luminance image; and

a detecting unit (402) configured to detect the object based on a second region that is determined by the distance information corresponding to first regions that are elongated in a vertical direction around both ends of the horizontal edge that is extracted by the edge extracting unit (401).

2. The image processing apparatus (30) according to claim 1, wherein

the detecting unit (402) specifies an upper edge point and a lower edge point from the distance information corresponding to the first regions, specifies a left edge point from the first region on a left side, specifies a right edge point from the first region on a right side, and determines a region enclosed by connecting the upper edge point, the lower edge point, the left edge point, and the right edge point as the second region.

3. The image processing apparatus (30) according to claim 1 or 2, wherein

the edge extracting unit (401) extracts, as the horizontal edge, a group of pixels constituted of pixels that are located within a predetermined interval from each other in a horizontal direction in the luminance image.

4. The image processing apparatus (30) according to any one of claims 1 to 3, wherein

the edge extracting unit (401) extracts, as the horizontal edge, pixels from among pixels for which change amounts of luminance values are equal to or larger than a predetermined value and change directions are within a predetermined angular range in the luminance image.

5. The image processing apparatus (30) according to any one of claims 1 to 4, wherein

the edge extracting unit (401) excludes a horizontal edge that does not satisfy a predetermined condition about a length of the horizontal edge from among horizontal edges extracted by the extracting unit (401).

6. The image processing apparatus (30) according to any one of claims 1 to 4, wherein

the edge extracting unit (401) excludes a horizontal edge that does not satisfy a predetermined condition about the distance information around the both ends of the horizontal edge from among horizontal edges extracted by the extracting unit (401).

7. The image processing apparatus (30) according to any one of claims 1 to 6, wherein

the detecting unit (402) compares an image of the second region and a predetermined template, and when determining that the second region and the template do not match each other as a result of comparison, excludes a horizontal edge corresponding to the second region.

8. The image processing apparatus (30) according to any one of claims 1 to 7, further comprising:

a generating unit (303) configured to set a score in accordance with a position of each of pixels in each of the second regions that are determined by respective horizontal edges extracted by the edge extracting unit (401), and generate a conspicuity map based on the scores, wherein

the detecting unit (402) detects the object based on a region that is determined by pixel values of the conspicuity map.

9. An object recognition device (1) comprising:

the first imaging unit (100a, 100b);

the second imaging unit (100b, 100a) that is arranged at a position different from a position of the first imaging unit(100a, 100b); and

the image processing apparatus (30) according to any one of claims 1 to 8.

10. A device control system (60) comprising:

the object recognition device (1) according to claim 9; and

a control device (6) configured to control a control target based on information on the object that is recognized by the object recognition device (1).

**11.** A movable body (70) comprising the device control system (60) according to claim 10.

**12.** An image processing method comprising:

acquiring an image, as a luminance image, any of an image that is captured by a first imaging unit (100a, 100b) and an image that is captured by a second imaging unit (100b, 100a), the first imaging unit (100a, 100b) and the second imaging unit (100b, 100a) imaging an object;
calculating distance information based on the images that are captured by the first imaging unit (100a, 100b) and the second imaging unit (100b, 100a);
extracting a horizontal edge from the luminance image; and
detecting the object based on a second region that is determined by the distance information corresponding to first regions that are elongated in a vertical direction around both ends of the extracted horizontal edge.

**13.** A non-transitory computer-readable medium including programmed instructions that cause a computer to execute:

acquiring an image, as a luminance image, any of an image that is captured by a first imaging unit (100a, 100b) and an image that is captured by a second imaging unit (100b, 100a), the first imaging unit (100a, 100b) and the second imaging unit (100b, 100a) imaging an object;
calculating distance information based on the images that are captured by the first imaging unit (100a, 100b) and the second imaging unit (100b, 100a);
extracting a horizontal edge from the luminance image; and
detecting the object based on a second region that is determined by the distance information corresponding to first regions that are elongated in a vertical direction around both ends of the extracted horizontal edge.

# FIG.1A

# FIG.1B

# FIG.1C

LEFT VISUAL FIELD    RIGHT VISUAL FIELD

TRAVELLING DIRECTION

# FIG.2

# FIG.3

RECOGNITION INFORMATION

CAN INFORMATION

# FIG.4

OBJECT RECOGNITION DEVICE — 1

IMAGE ACQUIRING UNIT — 100a → LUMINANCE IMAGE → CONVERTING UNIT — 200a → REFERENCE IMAGE Ia → DISPARITY CALCULATING UNIT — 300

IMAGE ACQUIRING UNIT — 100b → LUMINANCE IMAGE → CONVERTING UNIT — 200b → COMPARISON IMAGE Ib → DISPARITY CALCULATING UNIT — 300

DISPARITY CALCULATING UNIT — 300:
- COST CALCULATING UNIT — 301
- SUB-PIXEL ESTIMATING UNIT — 302
- DISPARITY IMAGE GENERATING UNIT — 303

→ DISPARITY IMAGE → CLUSTERING UNIT — 400

CLUSTERING UNIT — 400:
- EDGE EXTRACTING UNIT — 401
- OBJECT DETECTING UNIT — 402

→ RECOGNITION IMAGE INFORMATION → REJECTING UNIT — 500 → TRACKING DETERMINING UNIT — 550 → RECOGNITION IMAGE → VEHICLE CONTROL DEVICE — 6

# FIG.5

# FIG.6A

# FIG.6B

# FIG.7

# FIG.8

# FIG.9

# FIG.10A

Ia1

601

600

# FIG.10B

Ip

601a

600a

# FIG.11A

HORIZONTAL EDGE
CALCULATION FILTER

| -1 | -2 | -1 |
|----|----|----|
| 0  | 0  | 0  |
| 1  | 2  | 1  |

# FIG.11B

VERTICAL EDGE
CALCULATION FILTER

| -1 | 0 | 1 |
|----|---|---|
| -2 | 0 | 2 |
| -1 | 0 | 1 |

# FIG.12

## FIG.13A

Ia1

601

600

## FIG.13B

Ie

601b

## FIG.14

Ip

601a

610

600a

620

# FIG.15

le1

601b

# FIG.16

lp

601a

600a

# FIG.17

# FIG.18

# FIG.19

```
        START

    │                                      │
    ▼                      ⌐S1-1           ▼                      ⌐S1-2
┌─────────────────────┐           ┌─────────────────────┐
│  GENERATE ANALOG    │           │  GENERATE ANALOG    │
│    IMAGE DATA       │           │    IMAGE DATA       │
└─────────────────────┘           └─────────────────────┘
    │                      ⌐S2-1           │                      ⌐S2-2
    ▼                                      ▼
┌─────────────────────┐           ┌─────────────────────┐
│ PERFORM CONVERSION TO│          │ PERFORM CONVERSION TO│
│  DIGITAL IMAGE DATA │           │  DIGITAL IMAGE DATA │
└─────────────────────┘           └─────────────────────┘
    │                      ⌐S3-1           │                      ⌐S3-2
    ▼                                      ▼
┌─────────────────────┐           ┌─────────────────────┐
│ OUTPUT COMPARISON IMAGE│        │ OUTPUT REFERENCE IMAGE│
└─────────────────────┘           └─────────────────────┘
    │                                      │
    └──────────────────┬───────────────────┘
                       ▼                ⌐S4
           ┌───────────────────────────┐
           │   CALCULATE COST VALUE C   │
           └───────────────────────────┘
                       ▼                ⌐S5
           ┌───────────────────────────┐
           │    PERFORM SUB-PIXEL       │
           │      ESTIMATION            │
           └───────────────────────────┘
                       ▼                ⌐S6
           ┌───────────────────────────┐
           │  GENERATE DISPARITY IMAGE  │
           └───────────────────────────┘
                       ▼
                      END
```

# FIG.20

```
        ┌──────────────┐
        │    START     │
        └──────────────┘
                │
                ▼              ⌇S11
   ┌────────────────────────────┐
   │ GENERATE EDGE IMAGE FROM   │
   │     LUMINANCE IMAGE        │
   └────────────────────────────┘
                │
                ▼              ⌇S12
   ┌────────────────────────────┐
   │ EXTRACT HORIZONTAL EDGES   │
   │      FROM EDGE IMAGE       │
   └────────────────────────────┘
                │
                ▼              ⌇S13
   ┌────────────────────────────┐
   │ SPECIFY EACH OF EDGE POINTS│
   │ FROM DISPARITIES PRESENT AT│
   │   BOTH ENDS OF SPECIFIC    │
   │     HORIZONTAL EDGE        │
   └────────────────────────────┘
                │
                ▼              ⌇S14
   ┌────────────────────────────┐
   │   DETECT OBJECT FROM       │
   │  SPECIFIED EDGE POINTS     │
   └────────────────────────────┘
                │
                ▼
        ┌──────────────┐
        │     END      │
        └──────────────┘
```

# FIG.21

OBJECT RECOGNITION DEVICE ⌐1a

IMAGE ACQUIRING UNIT ⌐100a → LUMINANCE IMAGE → CONVERTING UNIT ⌐200a → REFERENCE IMAGE Ia

IMAGE ACQUIRING UNIT ⌐100b → LUMINANCE IMAGE → CONVERTING UNIT ⌐200b → COMPARISON IMAGE Ib

DISPARITY CALCULATING UNIT ⌐300
- COST CALCULATING UNIT ⌐301
- SUB-PIXEL ESTIMATING UNIT ⌐302
- DISPARITY IMAGE GENERATING UNIT ⌐303

→ DISPARITY IMAGE →

CLUSTERING UNIT ⌐400a
- EDGE EXTRACTING UNIT ⌐401
- MAP GENERATING UNIT ⌐403
- OBJECT DETECTING UNIT ⌐402a

→ RECOGNITION IMAGE INFORMATION →

REJECTING UNIT ⌐500 → TRACKING DETERMINING UNIT ⌐550 → RECOGNITION IMAGE → VEHICLE CONTROL DEVICE ⌐6

EP 3 540 643 A1

# FIG.22A

# FIG.22B

# FIG.23

## FIG.24A

Ia1

601

600

## FIG.24B

Im

## FIG.24C

Im1

# FIG.25

```
        ┌─────────────┐
        │    START    │
        └─────────────┘
               │
               ▼            ⌐S21
  ┌──────────────────────────┐
  │  GENERATE EDGE IMAGE FROM │
  │      LUMINANCE IMAGE      │
  └──────────────────────────┘
               │
               ▼            ⌐S22
  ┌──────────────────────────┐
  │  EXTRACT HORIZONTAL EDGES │
  │      FROM EDGE IMAGE      │
  └──────────────────────────┘
               │
               ▼            ⌐S23
  ┌──────────────────────────┐
  │ SPECIFY EACH OF EDGE POINTS│
  │ FROM DISPARITIES PRESENT AT│
  │   BOTH ENDS OF EACH OF    │
  │     HORIZONTAL EDGES      │
  └──────────────────────────┘
               │
               ▼            ⌐S24
  ┌──────────────────────────┐
  │ SPECIFY CANDIDATE POSITIONS│
  │  OF OBJECT FROM SPECIFIED │
  │        EDGE POINTS        │
  └──────────────────────────┘
               │
               ▼            ⌐S25
  ┌──────────────────────────┐
  │  GENERATE CONSPICUITY MAP │
  │    USING RECTANGLES AT    │
  │   RESPECTIVE CANDIDATE    │
  │        POSITIONS          │
  └──────────────────────────┘
               │
               ▼            ⌐S26
  ┌──────────────────────────┐
  │  BINARIZE CONSPICUITY MAP │
  │     AND DETECT OBJECT     │
  └──────────────────────────┘
               │
               ▼
        ┌─────────────┐
        │     END     │
        └─────────────┘
```

Europäisches
Patentamt

European
Patent Office

Office européen
des brevets

**EUROPEAN SEARCH REPORT**

Application Number

EP 19 16 2218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 811 423 A1 (RICOH CO LTD [JP]) 10 December 2014 (2014-12-10) * figures 3,15A-17C * * paragraph [0010] - paragraph [0013] * * paragraph [0027] * * paragraph [0039] - paragraph [0046] * ----- | 1-13 | INV. G06K9/00 G06K9/20 G06K9/46 |

TECHNICAL FIELDS
SEARCHED (IPC)

G06K

The present search report has been drawn up for all claims

| Place of search | Date of completion of the search | Examiner |
|---|---|---|
| The Hague | 9 August 2019 | Borges, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 16 2218

This annex lists the patent family members relating to the patent documents cited in  the above-mentioned European search report.
The members are as contained in the European Patent Office EDP file on
The European Patent Office is in no way liable for these particulars which are merely given for the purpose of information.

09-08-2019

| Patent document cited in search report | | Publication date | Patent family member(s) | | Publication date |
|---|---|---|---|---|---|
| EP 2811423 | A1 | 10-12-2014 | CN | 104217208 A | 17-12-2014 |
| | | | EP | 2811423 A1 | 10-12-2014 |
| | | | JP | 6496987 B2 | 10-04-2019 |
| | | | JP | 2014235750 A | 15-12-2014 |

EPO FORM P0459

For more details about this annex : see Official Journal of the European Patent Office, No. 12/82

**REFERENCES CITED IN THE DESCRIPTION**

**Patent documents cited in the description**

- JP 4123138 B